# EUROPÄISCHE PATENTSCHRIFT

(11) **EP 1 765 565 B1**
(45) Veröffentlichungstag und Bekanntmachung des Hinweises auf die Patenterteilung: **23.11.2011**
(21) Anmeldenummer: 05756394.2
(22) Anmeldetag: 12.07.2005
(51) Int. Cl.: B29C 45/16, B29C 45/00

(54) **VERFAHREN UND VORRICHTUNG ZUR HERSTELLUNG EINER ZAHNBÜRSTE IM ZWEI- ODER MEHRKOMPONENTEN-SPRITZGIESSVERFAHREN**
METHOD AND DEVICE FOR PRODUCING A TOOTHBRUSH ACCORDING TO A DOUBLE OF MULTI COMPONENT INJECTION MOULDING METHOD
PROCEDE ET DISPOSITIF POUR PRODUIRE UNE BROSSE A DENTS EN MOULAGE PAR INJECTION BIMATIERE OU MULTIMATIERE

(30) Priorität: 12.07.2004 CH 117904
(43) Veröffentlichungstag der Anmeldung: 28.03.2007
(60) Teilanmeldung: 10011025.3
(73) Patentinhaber: Trisa Holding AG, 6234 Triengen (CH)
(72) Erfinder: HUBER, Beat, CH-6233 Büron (CH); GROSS, Peter, CH-6204 Sempach (CH)
(74) Vertreter: Schaad, Balass, Menzl & Partner AG
(86) Internationale Anmeldenummer: PCT/CH2005/000398
(87) Internationale Veröffentlichungsnummer: WO 2006/005216

(56) Entgegenhaltungen:
- EP-A- 1 486 137
- WO-A-00/28854
- WO-A-99/16604
- WO-A-03/030680
- WO-A-2004/080238
- DE-U1- 20 013 862
- US-A- 2 706 825
- US-A- 6 161 245
- US-A1- 2003 131 433
- PATENT ABSTRACTS OF JAPAN Bd. 2000, Nr. 24, 11. Mai 2001 (2001-05-11) & JP 2001 190333 A (LION CORP), 17. Juli 2001 (2001-07-17)

## Beschreibung

Die Erfindung betrifft ein Verfahren und eine Vorrichtung zur Herstellung einer Zahnbürste oder eines Teils davon im Zwei- oder Mehrkomponenten-Spritzgiessverfahren gemäss Anspruch 1 15. Die Erfindung betrifft des weiteren eine Zahnbürste gemäss Anspruch 24.

Die Herstellung von Zahnbürsten im Zweikomponenten-Spritzgiessverfahren ist an sich bekannt und wird insbesondere bei hochwertigen Zahnbürsten angewendet, um hohen Anforderungen an Funktion und Design genügen zu können. Weit verbreitet sind beispielsweise Zahnbürsten, deren Körper aus einer formgebenden Hartkomponente besteht, an die zusätzliche weichelastische Funktionselemente angespritzt sind, beispielsweise ein Dämpfungsbereich im Halsbereich, Reinigungselemente im Kopfbereich oder eine Griffzone im Griffbereich. Die Verwendung verschiedener Hartmaterialien ermöglicht beispielsweise eine zwei- oder mehrfarbige Gestaltung der Bürste und/oder die Wahl verschiedener Materialqualitäten für die unterschiedlichen Bürstenbereiche. Derartige Zahnbürsten werden in einem Zweikomponenten-Spritzgiesswerkzeug hergestellt, bei dem in einer ersten Form zunächst ab einem ersten Anspritzpunkt sämtliche Bereiche aus der ersten Komponente und dann in einer zweiten Form ab weiteren Anspritzpunkten sämtliche Bereiche aus der zweiten Komponente gespritzt werden. Die Bereiche aus der ersten Komponente sind bei den bekannten Verfahren vollständig zusammenhängend, was sowohl das eigentliche Spritzgiessen als auch die weitere Handhabung des Rohlings, insbesondere das Überführen in den zweiten Formhohlraum erleichtert. Nachteilig hieran ist, dass der Formgebung von Funktionsbereichen hierdurch Grenzen gesetzt sind. Beispielsweise ist bei bekannten Zahnbürsten mit einem Dämpfungsbereich im Hals stets ein mäanderförmiges "Gerüst" aus Hartmaterial vorhanden, welches Griff- und Kopfbereich miteinander verbindet.

Aus der EP-A 0 923 326 oder der WO 98/27847 sind Zahnbürsten bekannt, die aus zwei Komponenten, einer Hart- und einer Weichkomponente, bestehen, wobei die erste Komponente Bereiche aufweist, die vollständig von den übrigen Bereichen aus der ersten Komponente getrennt und nur über die zweite Komponente mit diesen verbunden sind. Diese isolierten Bereiche werden im Folgenden als "Segmente" bezeichnet. Mit "übrige Bereiche" werden diejenigen Bereiche des Körpers bezeichnet, die aus der ersten Komponente bestehen, untereinander verbunden und keine "Segmente" sind.

Bei der Zahnbürste gemäss EP-A 0 923 326 sind einzelne Borstenbündel in hülsenartige Segmente aus einem Hartmaterial eingebettet. Die Segmente wiederum sind in ein weichelastisches Material eingebettet, das den Kopfteil der Bürste bildet. Griffbereich und Halsbereich bestehen wiederum aus dem Hartmaterial. Die Herstellungsmethode wird nicht angegeben.

Bei der Zahnbürste gemäss WO 98/27847 besteht der Kopfbereich aus mehreren, z.B. drei oder fünf, Segmenten aus einer Hartkomponente, die jeweils eine Mehrzahl von Borstenbündeln tragen. Die Zwischenräume zwischen den Segmenten sind mit einem Weichmaterial aufgefüllt. Auch hier wird die Herstellungsmethode nicht angegeben. Das

Dokument US-A-6161245 offenbart eine Zahnbürste gemäß dem Oberbegriff des Anspruchs 24.

Das Spritzgiessen insbesondere kleiner isolierter Strukturen ab mehreren Anspritzpunkten ist aus räumlichen Gründen problematisch. Die WO 99/16604 offenbart ein Verfahren, bei dem eine Zahnbürste mit zur Halterung von Borstenbündeln verwendeten isolierten Segmenten ab einem einzigen Anspritzpunkt realisiert wird. Zur Herstellung wird eine erste Form verwendet, in der miteinander verbundene Hohlräume zum Ausbilden sowohl der Segmente als auch der übrigen Bereiche aufweist. Die Segmente sind untereinander durch bewegliche Formkerne getrennt, jedoch nicht vollständig. Denn die Formkerne haben Aussparungen, durch die das flüssige Material von einem Teil-Hohlraum in den benachbarten Teil-Hohlraum fliessen kann. In diesen Aussparungen werden nach dem Erstarren Stegabschnitte gebildet, die die Segmente untereinander und mit den übrigen Bereichen verbinden. Vor dem Spritzgiessen der zweiten Komponente werden die Formkerne herausgezogen und die Stegabschnitte somit abgeschert. Problematisch hieran ist die Verteilung der ersten Komponente auf eine Vielzahl von Segmenten, da das Material in diesem Fall gleich durch mehrere enge Aussparungen in den Formkernen fliessen muss. Des weiteren wird durch das Herausziehen der Formkerne zwar die Verbindung zwischen zwei Segmenten durchschnitten, jedoch keine volle Beweglichkeit der Segmente relativ zueinander hergestellt. Die Reste der Stegabschnitte, die nur abgeschert, aber nicht entfernt werden, können die Bewegung der Segmente in nicht definierbarer Weise beeinträchtigen. Das Spritzgiesswerkzeug ist ausserdem wegen der beweglichen Formkerne verhältnismässig kompliziert. Zwischen den Segmenten besteht wegen der Formkerne ein gewisser Mindestabstand.

Die ältere, nachveröffentlichte WO 2004/080238A offenbart ein Verfahren und eine Vorrichtung zur Herstellung einer Bürste, insbesondere einer Zahnbürste, mit einem Borstenbündel aufweisenden Bürstenkopf. Bei dem Verfahren werden eine Vielzahl von Halteelementen in einer ersten Spritzgiessform ausgebildet. Die Borstenbündel werden in die einzelnen Halteelemente eingebracht; die Halteelemente werden an einer eine Werkzeughälfte einer zweiten Spritzgiessform komplettierenden Lochfeldplatte angeordnet und die Lochfeldplatte wird zur Komplettierung der zweiten Spritzgiessform in eine Werkzeughälfte der zweiten Spritzgiessform eingesetzt. Die zweite Spritzgiessform wird unter Einschluss eines in die zweite Spritzgiessform eingelegten vorgefertigten Bürstengrundkörpers geschlossen; durch Einspritzen einer weichelastischen Kunststoffkomponente werden die Borstenbündel unverlierbar mit dem Bürstengrundkörper verbunden; und die so geformte Bürste wird aus der zweiten Spritzgiessform entnommen. Die Vorrichtung weist dementsprechend eine erste Spritzgiessform zum Ausbilden der Halteelemente sowie eine zweite Spritzgiessform zum Abformen der weichelastischen Matte auf. Die eine Werkzeughälfte dieser zweiten Spritzgiessform weist Haltekanäle zum Aufnehmen der Borstenbündel sowie den Haltekanälen zugeordnete Haltemittel zum Halten je eines der Halteelemente im Bereich der Haltekanäle auf. Die andere Werkzeughälfte der Spritzgiessform bildet einen Hohlraum aus, der derart bemessen ist, dass ein vorgefertigter Bürstenkopf, der wenigsten eine die Umfangsfläche der Mattenkavität zum Abformen der Matte vorgebende Aufnehmung aufweist, in der geschlossenen zweiten Spritzgiessform aufnehmbar ist.

Der Erfindung liegt daher die Aufgabe zugrunde, ein Verfahren zur Herstellung einer Zahnbürste oder eines Teils davon im Zwei- oder Mehrkomponenten-Spritzgiessverfahren anzugeben, mit dem eine Zahnbürste oder ein Teil davon mit wenigstens einem Segment auf einfache Weise mit grosser Designfreiheit bezüglich Abmessungen und Lage des Segments herstellbar ist. Des weiteren soll eine Vorrichtung zur Durchführung des Verfahrens sowie eine Zahnbürste mit vorteilhaften Eigenschaften angegeben werden.

Die Aufgabe wird gelöst durch ein Verfahren mit den Merkmalen von Anspruch 1 und durch eine Vorrichtung mit den Merkmalen von Anspruch 15. Eine Zahnbürste mit besonderen Dämpfungseigenschaften weist die Merkmale von Anspruch 24 auf. Vorteilhafte Weiterbildungen ergeben sich aus den abhängigen Ansprüchen, der Beschreibung und den Zeichnungen.

In einer Variante der Erfindung wird ein Grossteil des Bürstenkörpers, z.B. der gesamte formgebende Teil, aus der ersten Komponente hergestellt, und die Segmente befinden sich davon isoliert im Kopfbereich der Zahnbürste. Bürstengriff- und Halsbereich sowie etwaige im Kopfbereich damit verbundene Teile sind dann mit den "übrigen Bereichen" der Zahnbürste zu identifizieren. In einer anderen Variante der Erfindung wird nur ein Teil der Zahnbürste, insbesondere ein später mit einem separat hergestellten Bürstenkörper zu verbindendes Trägerelement für Borsten hergestellt, indem Segmente und übrige Bereiche aus der ersten Komponente ausgebildet und anschliessend mittels der zweiten Komponente verbunden werden. Die übrigen Bereiche sind dabei beispielsweise diejenigen Stellen, an denen das Trägerelement mit dem Bürstenkörper verbunden wird, und die Segmente dienen wie bei der ersten Variante hauptsächlich zur Verankerung der Reinigungselemente, z.B. Borsten. Im Folgenden werden im Zusammenhang mit dem Trägerelement die zur Verankerung der Reinigungselemente dienenden Teile als "Segmente" und die dem Bürstenkörper zugeordneten Teile als "übrige Bereiche" bezeichnet; diese Zuordnung ist jedoch nicht zwingend.

Die Borsten können durch konventionelles Stopfen, im Anchor Free Tuftig (AFT)-Verfahren oder im In Mould Tufting (IMT)-Verfahren angebracht werden. Beim konventionellen Stopfen bilden die Segmente vorzugweise hülsenförmige Aufnahmen, in die die Ankerplättchen nach dem Spritzen beider Komponenten eingestanzt werden. Beim AFT-Verfahren haben die Segmente vorzugsweise durchgehende Löcher, durch die Borsten ebenfalls nach dem Spritzen beider Komponenten hindurchgeführt und zur Verbindung mit dem Trägerelement an ihren rückwärtigen Enden aufgeschmolzen werden. Beim IMT-Verfahren werden die Borsten beim Spritzen der ersten Komponente in die Segmente eingegossen oder beim Spritzen der zweiten Komponente mit diesen verbunden.

Das Trägerelement wird unlösbar oder lösbar mit dem Bürstenkörper verbunden, letzteres z.B. zur Herstellung einer Wechselkopfzahnbürste. Separat hergestellte Trägerelemente eignen sich wegen der guten Zugänglichkeit der Rückseite vor allem zur Beborstung mittels des AFT-Verfahrens, jedoch ist auch konventionelles Stopfen möglich.

In einer vorteilhaften Weiterbildung der Erfindung wird zur Herstellung der ersten Komponente eine erste Form verwendet, die wenigstens drei Hohlbereiche aufweist. Zwei vollständig voneinander getrennte Hohlbereiche entsprechen den Segmenten bzw. den übrigen Bereichen des Bürstenkörpers. Ein dritter Hohlbereich dient dazu, die ihm zugeführte flüssige erste Komponente auf den den Segmenten entsprechenden zweiten Hohlbereich zu verteilen. Falls mehrere Segmente vorhanden sind, besteht der zweite Hohlbereich aus einer entsprechenden Anzahl von Unterbereichen, die ausschliesslich über den dritten Hohlbereich miteinander in Verbindung stehen. Der Querschnitt der Verbindungsstellen ist vorzugsweise so gering, dass das im dritten Hohlbereich zurückgebliebene Material (Angussspinne) einfach abgetrennt werden kann, z.b. durch Wegbewegen der entsprechenden Teilform. Dieses Material wird anschliessend entsorgt, vorzugsweise recycelt. Der dritte Hohlbereich ermöglicht also im Gegensatz zur Verwendung von mehreren Anspritzpunkten das Verteilen von Material ab einem Anspritzpunkt auch auf im Verhältnis zum Bürstenkörper um ein Vielfaches kleinere Strukturen. Damit können beispielsweise voneinander isolierte feine Hülsen zum Haltern von Borstenbündeln hergestellt werden. Die Segmente sind nach Entfernen des Materials aus dem dritten Hohlbereich vollständig voneinander getrennt und können sich daher auch nach Umspritzen mit der zweiten Komponente ohne Beeinträchtigungen gegeneinander bewegen.

Im Prinzip können die Hohlbereiche der gesamten ersten Form durch einen einzigen Anspritzpunkt versorgt werden, wenn zwischen dem ersten und dem dritten Hohlbereich eine Verbindung besteht. Bevorzugt ist, dass der erste und dritte Hohlbereich jeweils ab mindestens einem eigenen Anspritzpunkt versorgt wird.

Je nach Anzahl und Lage der Segmente kann der dritte Hohlbereich auch in voneinander getrennte Unterbereiche untergliedert sein, die von jeweils einem Anspritzpunkt versorgt werden.

In einer vorteilhaften Weiterbildung des Verfahrens wird die räumliche Lage der Segmente relativ zueinander und/oder zu den übrigen Bereichen verändert, bevor die zweite Komponente gespritzt wird. Dies ist aufgrund der vollständigen Trennung der Segmente untereinander und von den übrigen Bereichen problemlos möglich. Die Segmente können vor dem Anspritzen der zweiten Komponente auch einander und/oder die übrigen Bereiche berührend und/oder ineinandergreifend/montiert angeordnet werden.

Die erste Komponente ist vorzugsweise eine Hartkomponente und die zweite Komponente eine Hart- oder eine Weichkomponente. Als Hartkomponente wird beispielweise Styrolacrylnitril (SAN), Polyethylenterephthalat (PET), Polyethylen (PE), Polymethylmethacrylat (PMMA), Acrylbutadienstyrol (ABS), Polypropylen (PP) verwendet. Als Weichkomponente wird ein gummielastischer Werkstoff, vorzugsweise ein thermoplastisches Elastomer (TPE) verwendet, oder z.B. Polyurethan (PUR). Als mögliche Materialkombination kommt beispielsweise hart-hart in Frage, z.B. die Kombination von einem transparenten mit einem opaken Hartmaterial und/oder Hartmaterial mit verschiedenen Farben. Bevorzugt ist jedoch die Kombination hart-weich zur Herstellung flexibler Verbindungselemente zwischen den Segmenten. Das Anspritzen weiterer Komponenten ist ebenfalls möglich. Es handelt sich dabei vorzugsweise um weitere Weichkomponenten, welche and die Segmente oder an die übrigen Bereiche angespritzt wird.

Bevorzugt wird mit dem erfindungsgemässen Verfahren eine Zahnbürste hergestellt, die im Kopfbereich eine Mehrzahl von Segmenten aufweist. Im Kopfbereich ist als Verbindungselement zwischen den Segmenten und dem restlichen Körper eine Membran aus der zweiten Komponente aufgespannt, in die die Segmente eingebettet sind. Die Verbindung der Membran mit dem Bürstenkörper kann direkt sein oder indem sie in ein Trägerelement eingebettet ist, das mit einem separat hergestellten Bürstenkörper verbunden ist. Die Segmente sind bevorzugt hülsen- oder becherförmig und können jeweils ein oder mehrere konventionell oder im AFT-Verfahren angebrachte Borstenbündel halten. Durch die Membran wird eine besonders flexible Aufhängung der Borsten realisiert.

Besonders bei einem flexiblen Trägerelement, das im AFT-Verfahren beborstet wird, insbesondere einem erfindungsgemäss hergestellten, besteht das Problem, dass die Borstenschmelze nicht ausreichend am Trägerelement haftet. Hierzu wird vorgeschlagen, die Borsten oder das Trägerelement vor dem Aufschmelzen der Borstenenden so zu behandeln, dass durch das Aufschmelzen eine erhöhte Haftung zwischen dem Trägerelement und den Borsten entsteht.

Beispiele der Erfindung sind in den Zeichnungen dargestellt und nachfolgend beschrieben. Es zeigen rein schematisch:
- Fig. 1: eine Schnittansicht einer ersten Spritzgiessform mit drei Teilformen nach dem Spritzen einer ersten Komponente;
- Fig. 2: eine Schnittansicht gemäss Fig. 1 nach dem Trennen ersten Teilform von der zweiten und dritten Teilform;
- Fig. 3: eine Schnittansicht gemäss Fig. 1 nach dem Trennen von zweiter und dritter Teilform;
- Fig. 4: eine Schnittansicht einer zweiten Spritzgiessform mit zwei Teilformen nach dem Spritzen einer zweiten Komponente;
- Fig. 5: eine Schnittansicht gemäss Fig. 4 nach dem Trennen beiden Teilformen;
- Fig. 6a, 6b, 7a, 7b: verschiedene Ansichten eines nach dem erfindungsgemässen Verfahren hergestellten Bürstenkopfes;
- Fig. 8: ein Zweikomponenten-Spritzgiesswerkzeug gemäss Fig. 1-5;
- Fig. 9, 10: Ansichten einer weiteren Zahnbürste nach dem Spritzen der ersten bzw. zweiten Komponente;
- Fig. 11-15: Beispiele für Zahnbürsten mit einem mit dem erfindungsgemässen Verfahren separat hergestellten Trägerelement für Borsten mit einer Membran in verschiedenen Ansichten;
- Fig. 16, 17: Beispiele für Zahnbürsten, die im Kopfbereich eine Membran aufweisen, mit einem mit dem erfindungsgemässen Verfahren hergestellten Bürstenkörper;
- Fig. 18: stark vereinfacht ein erster Spritzgiesszyklus, bei welchem zwei Teile einer Zahnbürste hergestellt werden;
- Fig. 19: in Draufsicht die beiden im ersten Spritzgiesszyklus hergestellten Teile;
- Fig. 20: das Umspritzen der zusammengefügten Teile gemäss Fig. 19 mittels einer Weichkomponente;
- Fig. 21: in Draufsicht die unbeborstete Zahnbürste, hergestellt aus den Teilen gemäss Fig. 19 nach dem Verfahren gemäss Fig. 18 und 20;
- Fig. 22: in Draufsicht ein erstes durch Spritzgiessen hergestelltes Teil;
- Fig. 23: in Draufsicht ein zweites durch Spritzgiessen hergestelltes Teil;
- Fig. 24a: in Draufsicht eine Ansicht einer weiteren Zahnbürste mit den in den Fig. 22 und 23 gezeigten Teilen, welche mittels einer weiteren Komponente, insbesondere einer Weichkomponente miteinander verbunden sind;
- Fig. 24b: in Seitenansicht die in Fig. 24a gezeigte Zahnbürste;
- Fig. 25: eine Längsschnittansicht einer weiteren Spritzgiessform mit zwei Hohlbereichen zur Herstellung der zwei in den Fig. 22 und 23 gezeigten der Zahnbürstenteile; und
- Fig. 26: eine Querschnittansicht der in Fig. 25 gezeigten Spritzgiessform durch die Ebene III-III.

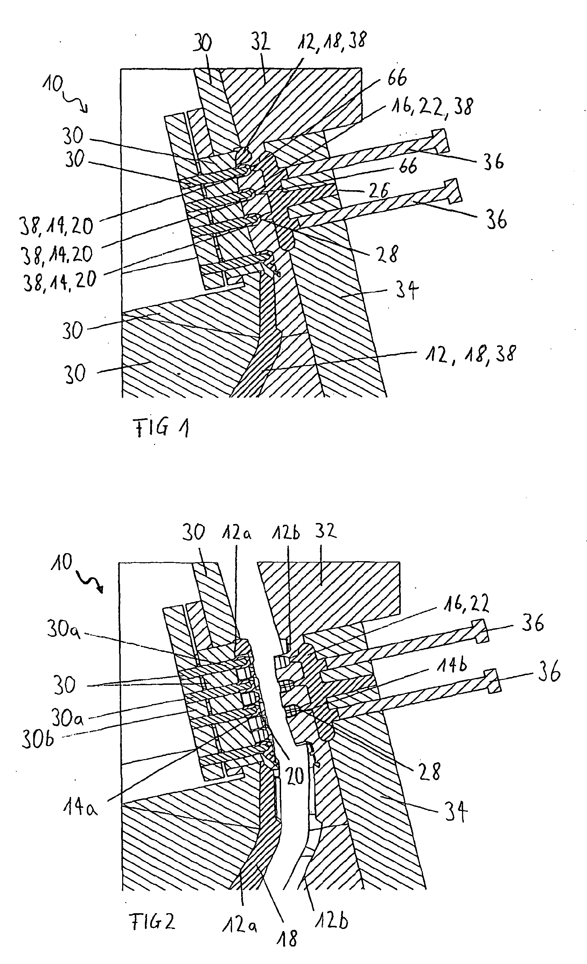

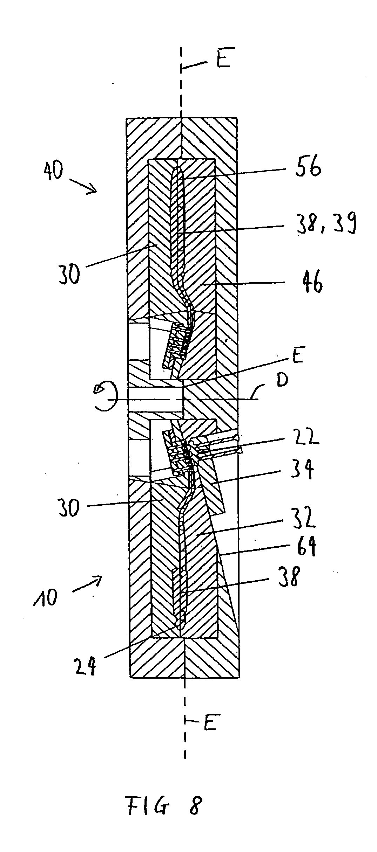

Die Figuren 1-5 zeigen Ansichten eines zur Durchführung des erfindungsgemässen Verfahrens verwendeten Spritzgiesswerkzeugs in verschiedenen Verfahrensstadien. Fig. 8 zeigt dieses Werkzeug im Überblick. Ziel ist die Herstellung einer Zahnbürste mit in Hülsen flexibel gehalterten Borstenbündeln, z.B. gemäss Anspruch 24 oder gemäss EP-A 0 923 326. ,

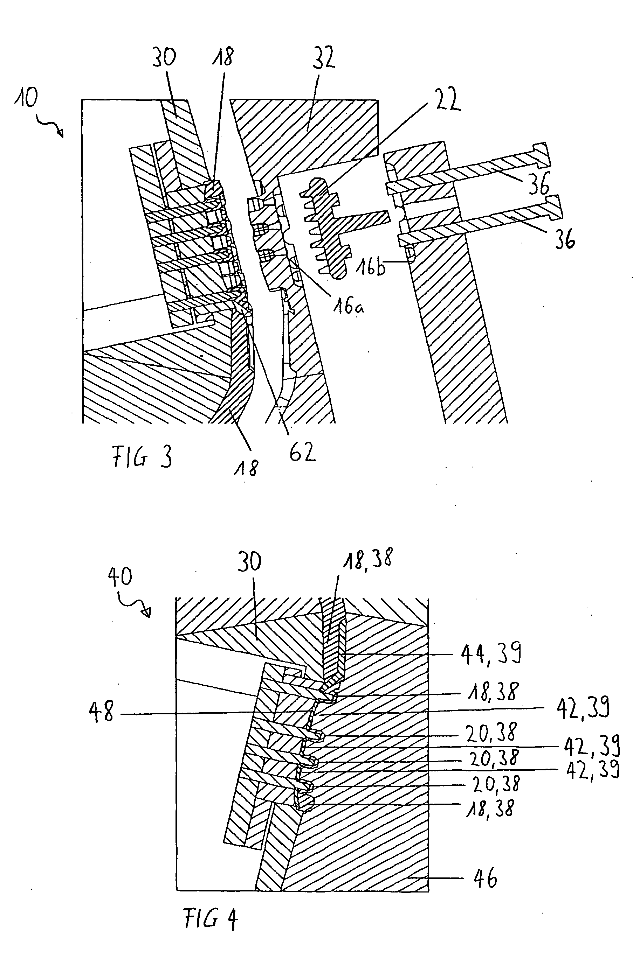

Eine in den Fig. 1-3 dargestellte erste Form 10 setzt sich aus drei Teilformen 30, 32, 34 zusammen, die jeweils weiterhin untergliedert sein können. Zwischen der ersten Teilform 30 und der zweiten Teilform 32 sind durch Wandbereiche 12a, 12b (siehe Fig. 2) sowohl erste Hohlbereiche 12 als auch durch Wandbereiche 14a, 14b (siehe Fig. 2) zweite Hohlbereiche 14 gebildet. Die ersten und zweiten Hohlbereiche 12, 14 stehen nicht miteinander in Verbindung. Der zweite Hohlbereich 14 ist in mehrere Unterbereiche untergliedert, die ebenfalls nicht direkt miteinander in Verbindung stehen. Zwischen der zweiten Teilform 32 und der dritten Teilform 34 befindet sich ein dritter Hohlbereich 16, der durch Wandbereiche 16a, 16b der jeweiligen Teilformen 32, 34 gebildet ist (vgl. Fig. 3). Dieser steht über mehrere Arme 66 mit den Unterbereichen des zweiten Hohlbereichs 14 in Verbindung. Die Arme 66 verlaufen konisch und haben eine Länge zwischen 5 und 22 mm, vorzugsweise 17 mm. Die Verbindung der Arme 66 mit den Unterbereichen ist über schmale Durchtrittsöffnungen 28 realisiert, die vorzugsweise einen runden Querschnitt mit einem Durchmesser von 0,2-1,0 mm, besonders bevorzugt etwa 0,7 mm haben. Falls in zweiten Hohlbereichen 14 hergestellte Segmente 20 mehrere Borstenbündel 58 aufzunehmen haben, wird aus Stabilitätsgründen vorgeschlagen, jede der entsprechenden Teilhülsen mit einem eigenen Arm 66 an den dritten Hohlbereich 16 anzuschliessen.

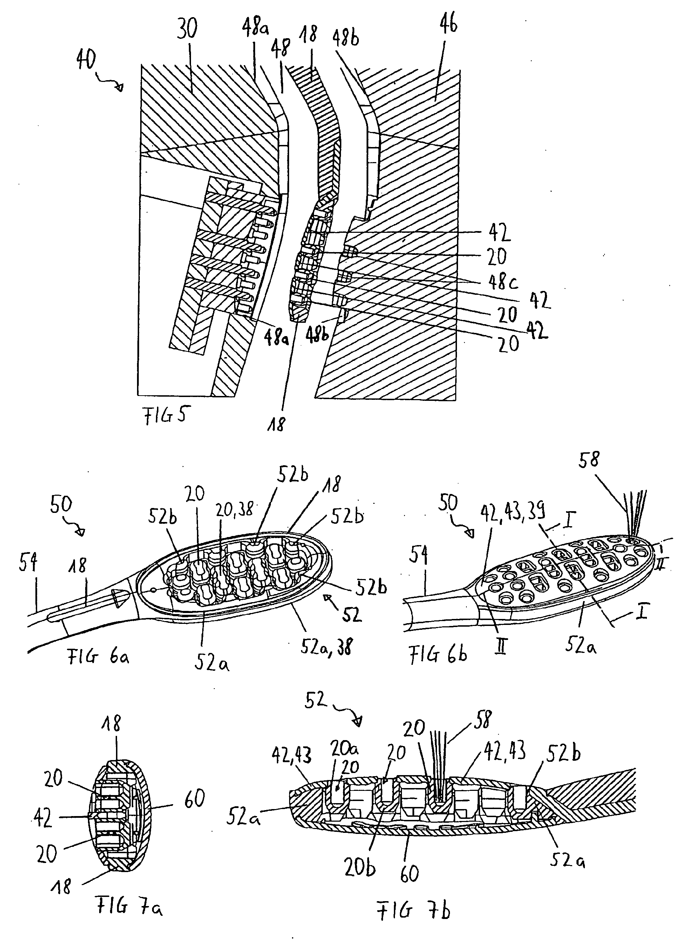

Der erste Hohlbereich 12 wird über einen ersten Anspritzpunkt 24 (siehe Fig. 8), mit geschmolzener erster Komponente 38, vorzugsweise einer Hartkomponente im Heisskanalanguss versorgt, um die aus der ersten Komponente bestehenden übrigen Bereiche 18 der Zahnbürste mit Ausnahme der Segmente 20 herzustellen. Die übrigen Bereiche 18 sind, wie in Fig. 6a,b, 7a,b dargestellt, ein umlaufender Rand 52a des Kopfbereichs 52 mit vorgeformten Hülsen 52b zur Borstenaufnahme sowie Teile des Halsbereichs 54 und des Griffbereichs 56 (siehe Fig. 8). Vorzugsweise wird für den ersten und dritten Hohlbereich eine Heisskanaldüse mit Nadelverschluss eingesetzt.

Die zweiten Hohlbereiche 14 werden indirekt durch Materialzufuhr am dritten Hohlbereich 16 über einen zweiten Anspritzpunkt 26 mit geschmolzener erster Komponente 38 versorgt. Da erstarrtes Material 22 im dritten Hohlbereich 16 zurückbleibt, handelt es sich um Materialzufuhr über einen Kaltkanal.

Trotz mehrerer Anspritzpunkte 24, 26 wird die erste Komponente 38 vorzugsweise über dieselbe Plastifizierungseinheit zugeführt, eventuell im Kaskadeverfahren. Es ist eine geeignete Steuerung zum zeitlich aufeinander abgestimmten Öffnen und Schliessen der Materialzufuhr zum ersten und dritten Hohlbereich vorhanden.

Wie in Fig. 2 dargestellt, werden die erste und die zweite Teilform 30, 32 nach dem Spritzgiessen und Erstarrenlassen der ersten Komponente 38 voneinander getrennt. Die zweite und dritte Teilform 32, 34 werden gleichzeitig oder vorzugsweise leicht verzögert getrennt, vgl. Fig. 3. Durch das Trennen der ersten und zweiten Teilform 30, 32 wird das im dritten Hohlbereich 16 enthaltene erstarrte Material 22 von den Segmenten 20 abgerissen, die in den zweiten Hohlbereichen 14 gebildet wurden. Dieses Abreissen ist aufgrund der kleinen Durchtrittsöffnungen 28 gut definiert und unter geringem Kraftaufwand durchführbar. Zurück bleiben in der ersten Teilform 30 die übrigen Bereiche 18 sowie davon und untereinander separierte Segmente 20. Diese haben hier die Form von Hülsen. Die Segmente 20 können jedoch auch die Form von Ringen oder Bechern aufweisen, wie weiter unten erläutert wird. Die hülsenförmigen Segmente 20 stecken auf Stiften 30a, die Teil der ersten Teilform 30 sind und zum Ausformen des Innenbereichs der Hülsen bzw. Segmente 20 dienen. Die Stifte 30a können vorzugsweise relativ zu einer Matrix 30b verschoben werden, um die Lage der Hülsen im Bürstenkopf als Paket anzupassen. Des weiteren ist es möglich, die Stifte 30a und damit die Segmente 20 durch Entfernen der Matrix 30b nach dem Spritzen der ersten Komponente 38 frei zu bewegen (hier nicht dargestellt). Somit kann auch die Lage der Segmente 20 zueinander und zu den übrigen Bereichen 18 verändert werden, ohne dass ein komplizierter Halte- und Verschiebemechanismus zum Ergreifen und Bewegen der kleinen Segmente 20 notwendig ist.

In einem weiteren, in Fig. 3 skizzierten Verfahrensschritt werden auch die zweite und dritte Teilform 32, 34 getrennt. Das erstarrte Material 22 wird mittels stempelartiger, in den dritten Hohlbereich 16 verschiebbarer Auswerfer 36 gelöst und entsorgt. Die erste Form 10 ist dazu vorzugsweise so angeordnet, dass das ausgeworfene Material 22 aufgrund der Schwerkraft in Bereiche fällt, in denen sich keine weiteren Formen befinden, so dass es sich nicht in weiteren Formnestern oder an fertigen oder halbfertigen Produkten verfangen kann. Die Trennung von der Angusspinne befindet sich somit vorzugsweise räumlich gesehen in der tiefsten Station/ Form des Mehrstationenwerkzeuges. Bevorzugt wird die Angusspinne mittels eines Handlingsystems oder eines Roboters von unten ergriffen und entsorgt. Dies hat den Vorteil, dass sich sicher keine Angusspinnen zwischen den Platten verklemmen können.

In einem weiteren Verfahrensschritt wird die Form gewechselt. Fig. 4 zeigt die zweite Form 40 zum Spritzen der zweiten Komponente 39. Sie besteht aus zwei Teilformen, von denen eine mit der ersten Teilform 30 aus den vorherigen Schritten identisch ist. Dies hat den Vorteil, dass ausser dem Anlegen einer neuen weiteren Teilform 46 keine Schritte zum separaten Greifen und Bewegen des Rohlings notwendig sind. Das Überführen in die zweite Form 40 geschieht vorzugsweise durch Drehen und/oder Verschieben der ersten Teilform 30, beispielsweise durch Drehen um eine Achse D um 180°, wie in Fig. 8 gezeigt, oder um 90°/120°, falls zusätzliche Kunststoffkomponenten in weiteren Stationen/Formen angespritzt werden. Auch ein manueller Formwechsel ist möglich. Die Wandbereiche 48a, 48b (Fig. 5) der weiteren Teilform 46 sind im Bereich des vierten Hohlbereichs 48 derart an die Form der Segmente 20 angepasst, dass lediglich zwischen den Segmenten 20 dünne Verbindungselemente 42 gespritzt werden. Der Wandbereich 48b weist dazu beispielsweise Vertiefungen 48c auf, die im wesentlichen der Form der Segmente 20 entsprechen, allerdings weniger tief sind. Damit ist der Boden 20b der Segmente 20 beim Spritzen der zweiten Komponente 39 abgedeckt, während der obere Rand 20a frei bleibt und somit von der zweiten Komponente 39 umgeben wird. Um eine gute Verbindung zwischen den Segmenten 20 und der zweiten Komponente 39 zu gewährleisten, wird neben der flächigen Membran 43 auch eine dünne Materialschicht um den oberen Rand und die sich daran anschliessenden Bereiche der hülsenförmigen Segmente 20 gespritzt. Die Membrane 43 legt sich vorzugsweise als Kragen um die Segmente 20 herum. Durch die somit lokal grössere Materialstärke der Membran 43 werden die Segmente 20 sicher verankert. Die Verbindungselemente 42 haben insgesamt die Form einer durchgehenden Membran 43, in die die hülsenförmigen Segmente 20 an ihrem oberen Rand 20a eingebettet sind, vgl. Fig. 6b, 7a, 7b. Ausserdem werden am Hals- und Griffbereich 54, 56 weitere Bereiche 44 aus der zweiten Komponente 39 gespritzt. Über einen in der ersten Komponente 38 ausgesparten Kanal 62 (siehe Fig. 3) wird die geschmolzene zweite Komponente 39 vom Halsbereich 54 in den Kopfbereich 52 zugeführt.

Es ist selbstverständlich möglich, die Segmente 20 auch vollständig in die zweite Komponente 39 einzubetten. Dies wird vorzugsweise angewandt, wenn die Segmente 20 relativ dünn gehalten werden können. Dies ist insbesondere bei der Anwendung des AFT oder IMT Verfahrens der Fall, bei dem die Segmente 20 in der Form von unten offenen Ringen gebildet werden. Auf dieses Verfahren wird weiter hinten noch detailliert eingegangen.

Der Einspritzpunkt für die zweite Komponente 39 liegt aus Platzgründen vorzugsweise nicht auf der Membrane 43 im Kopfbereich 52, sondern im Hals- oder Griffbereich 54, 56. Durch die Verlagerung des Einspritzpunktes kann auch der ansonsten geringe Materialverbrauch künstlich erhöht werden, um ein minimales Schussgewicht einzuhalten.

Fig. 5 zeigt schematisch einen weiteren Verfahrensschritt, bei dem die Teilformen 30, 46 der zweiten Form 40 voneinander getrennt werden und der Zahnbürstenkörper entnommen wird.

Fig. 8 zeigt ein Zweikomponenten-Spritzgiesswerkzeug gemäss Fig. 1-5 mit zwei Formen 10, 40, von denen die linke erste Teilform 30 jeweils identisch ist. Die Teilformen 30 und 32/34 sowie 30 und 46 können entlang einer Vertikalebene E bzw. im Bereich der Zahnbürste leicht versetzt dazu getrennt werden. Die linken ersten Teilformen 30 sind ausserdem um die horizontal verlaufende Drehachse D drehbar, um ein Produkt nach der Herstellung der ersten Komponente in die zweite Form 40 zu überführen. Beim Auftrennen der ersten Form 10 fällt das erstarrte Material 22 im dritten Hohlbereich 16 über eine schräge Fläche 64 nach unten und kann sich somit nicht in anderen Produkten oder Formen verfangen.

In den Fig. 6a,b und 7a,b sind verschiedene Ansichten eines nach dem erfindungsgemässen Verfahren hergestellten Bürstenkopfes dargestellt. Fig. 6a zeigt einen Teil einer Zahnbürste 50 in Aufsicht von unten auf das Kopfteil 52, d.h. auf die borstenabgewandte Rückseite. Fig. 6b zeigt dieselbe Zahnbürste 50 in Aufsicht auf die borstentragende Vorderseite des Kopfteils 52. Fig. 7a und b zeigen dieselbe Bürste im Quer- bzw. Längsschnitt entlang der Linie I-I bzw. II-II.

Die Borstenbündel 58, von denen nur eines skizziert ist, sind in hülsen- oder becherartigen Segmenten 20 gehaltert, die vorzugsweise konventionell durch Stopfen beborstet wurden. Ein Segment 20 hält hier ein bis drei Borstenbündel 58, kann jedoch auch grössere Gruppen von Borstenbündel oder andere Reinigungsstrukturen, wie z.B. weichelastische Reinigungselemente halten. Die Öffnungen der Hülsen 20 sind elliptisch geformt, um sich beim konventionellen Stopfen an die Form der Ankerplättchen anzupassen. Das heisst, die Ankerplättchen werden jeweils so gelegt, dass diese im wesentlichen auf der grösseren Achse der Ellipse zu liegen kommen. Indem sich das hülsenförmige Segment 20 somit um das Ankerplättchen herumlegt, wird das Auszugsgewicht der Borsten erhöht. Um ein sicheres Stopfen zu ermöglichen, sind die Segmente 20 an ihrer Unterseiten 20b konisch geformt. Die Böden der Unterseite 20b liegen vorzugsweise in einer Ebene, so dass sie beim Stopfen auf einer Unterlage abgestützt werden können. Vorzugsweise wird eine Unterlage mit einer Mehrzahl von Einbuchtungen verwendet, in die die Segmente 20 hineinpassen und durch die sie beim Stopfen gut abgestützt und seitlich fixiert werden. Obwohl die Membran 43 eine konvexe, gewölbte Grundform aufweisen kann, haben die Segmente 20 vorzugsweise eine flache obere Begrenzungsfläche. Dadurch wird ebenfalls das Einführen und die Verankerung der Borstenbündel 58 erleichtert.

Die Verbindung der hülsenförmigen Segmente 20 mit dem Material 22 bzw. die Verbindung der entsprechenden Hohlbereiche 14, 16 ist vorzugsweise derart, dass jedes Segment 20 mittig auf seiner Unterseite mit dem Material 22 verbunden ist. Der dritte Hohlbereich 16 bzw. die darin vorhandene erste Komponente 38 wirkt als Verteilerelement beim Spritzgiessen. Hierdurch wird eine gute Materialverteilung, ein sauberes Abtrennen/Abreissen des erstarrten Materials 22 und die Verminderung der Rissbildung ermöglicht. Die Materialverbindung hat vorzugsweise einen runden Querschnitt mit einem Durchmesser von 0,2-1 mm, vorzugsweise 0,7 mm.

Alternativ können die Segmente 20 auch im Anchor-Free-Tufting- (AFT) oder In-Mould-Tufting- (IMT) Verfahren beborstet werden. Im Fall von AFT-Beborstung sind die Segmente 20 vorzugsweise beidseitig offene Hülsen, in die vorzugsweise nach dem Spritzen beider Komponenten 38, 39 Borstenbündel 58 eingeführt und anschliessend an ihren rückwärtigen Enden aufgeschmolzen werden.

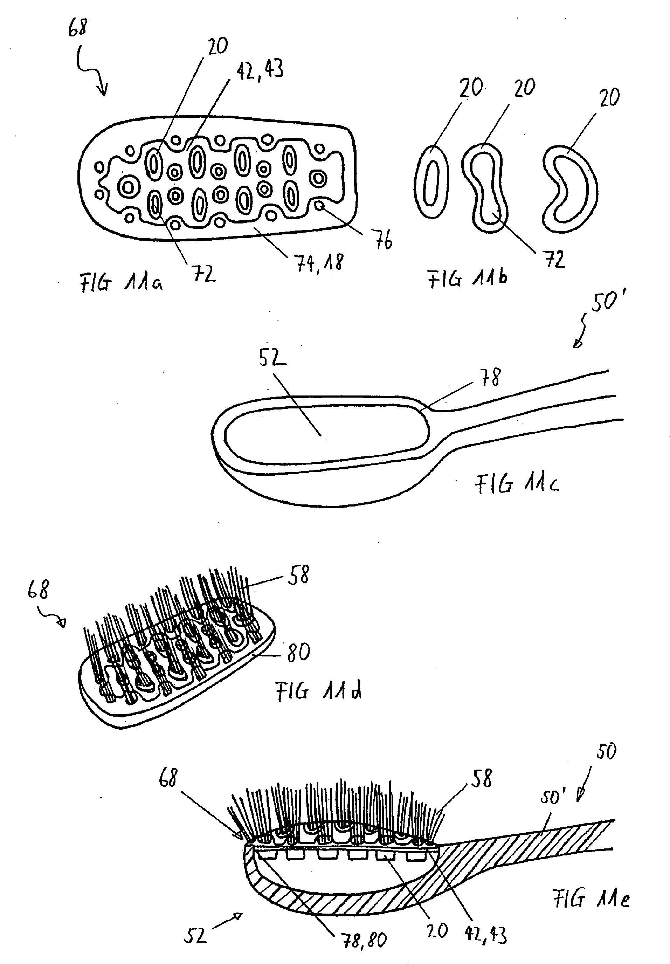

Vor allem beim AFT Verfahren werden zunächst nur die Trägerelemente für die Borsten, d.h. ein Teil des Bürstenkopfs, mit dem erfindungsgemässen Verfahren hergestellt. Die Trägerelemente bestehen bevorzugt aus insbesondere beidseitig offenen hülsenförmigen Segmenten 20, die durch Verbindungselemente in Form einer vorzugsweise dünnen Membran 43, die auch durchbrochen sein kann, verbunden sind. Die "übrigen Bereiche" 18 aus der ersten Komponente 38 können klein sein. Sie dienen vor allem dazu, das Trägerelement mit einem separat hergestellten Bürstenkörper zu einer vollständigen Zahnbürste 50 zu verbinden, insbesondere zu verschweissen. Die "übrigen Bereiche" 18 können auch dazu dienen, dem Trägerelement die notwendige Stabilität zu verleihen, falls die Membran 43 nicht die nötige Eigenstabilität hat, z.B. indem sie als umlaufender oder bogenförmiger Rand oder als zwei Stege ausgebildet sind, an dem bzw. zwischen denen die Membran aufgespannt ist. Vorzugsweise werden die Segmente 20 mit den übrigen Bereichen zusammen ab einem einzigen Anspritzpunkt in der Hartkomponente 38 gebildet. Vorzugsweise bestehen die zu verschweissenden Elemente zwischen AFT Trägerelement und dem eigentlichen Zahnbürstenkörper aus demselben Hartmaterial, um die Materialverträglichkeit und damit die Haltbarkeit der Schweissnaht zu erhöhen. Die wesentlichen Verfahrenschritte zur Bildung der Segmente 20 bleiben jedoch wie bereits geschildert. Beispiele für solche Trägerelemente und damit hergestellte Zahnbürsten werden weiter unten mit Bezug auf Fig. 11-15 beschrieben.

Bei IMT-Beborstung werden die Borstenbündel 58 bereits vor dem Spritzen der ersten Komponente 38 durch geeignete Aussparungen in die erste Form 10 eingeführt und an ihren rückwärtigen Enden mit der ersten Komponente 38 umspritzt und so in den Segmenten 20 bzw. übrigen Bereichen 18 verankert. Auch eine Fixierung durch die zweite Komponente 39 ist möglich.

Die aus der ersten Komponente 38, einer Hartkomponente hergestellten Segmente 20 befinden sich im Kopfbereich 52 der Zahnbürste 50 und sind in dieser Ausgestaltungsvariante von einem umlaufenden Rand 52a umgeben, der ebenfalls aus der Hartkomponente besteht. Mit diesem Rand 52a sind die Segmente 20 jedoch nicht direkt verbunden, sondern nur über die als Verbindungselement 42 wirkende Membran 43, die aus der zweiten Komponente 39, einer Weichkomponente besteht. Einstückig mit dem Rand 52a sind weitere Hülsen 52b geformt, die ebenfalls zur Borstenhalterung dienen. Der Rand 52a bildet zusammen mit den aus der Hartkomponente bestehenden Bereichen des Hals- und Griffbereichs 54, 56 die "übrigen Bereiche" 18, die in einem Arbeitsgang zusammen mit den Segmenten 20 gespritzt werden.

Die Membran 43 ist lediglich beim offenen Ende, am oberen Rand 20a der Segmente 20 sowie an der Oberseite des Randes 52a des Kopfteils 52 angebracht. Auf diese Weise ergibt sich eine sehr flexible Aufhängung der Segmente 20, die eine grosse Beweglichkeit der Segmente 20 relativ zueinander und zum Rand 52a ermöglicht. Die Borsten der so hergestellten Zahnbürste 50 sind durch diese Aufhängung besonders nachgiebig und anpassungsfähig, wodurch eine besonders schonende Zahnreinigung ermöglicht wird.

Die Rückseite der Zahnbürste 50 ist mit einem Deckelelement 60 abgedeckt, so dass sich keine Rückstände zwischen den Segmenten 20 absetzen können. Vorzugsweise besteht dieses Deckelelement 60 aus einem transparenten oder transluzenten Hart- oder Weichmaterial, so dass die bewegliche Aufhängung von aussen sichtbar ist und dem Käufer unmittelbar angezeigt werden kann. Zur Befestigung des Deckelelements 60 hat der Rand 52a des Kopfbereichs 52 vorzugsweise eine umlaufende Schweisskante 52d. Der dadurch gebildete umlaufende Rahmen der Vorderseite bildet die Abstützung zur wasserdichten Verschweissung des Deckelelementes 60.

Die Segmente 20 (Einzelhülse) sind vorzugsweise zwischen 2 und 6 mm (bevorzugt 3 mm) tief und zwischen 2 und 4 mm (bevorzugt 3 mm) breit. Die Membran 43 ist vorzugsweise zwischen 0,3 und 3 mm dick, besonders bevorzugt zwischen 0,6 und 1,0 mm. Damit können die Segmente 20 eine Taumelbewegung ausführen. Der Abstand der Segmente 20 untereinander beträgt vorzugsweise mindestens 0,2 und höchstens 3 mm. Sie nehmen vorzugsweise wenigstens die Hälfte der Oberfläche der Membran 43 bzw. der vom Rand 52a aufgespannten Fläche ein. Ihre Böden 20b sind vorzugsweise vom Deckelelement 60 wenigstens 1-3 mm beabstandet.

Die Membran 43 ist gewölbt (konvex oder konkav) . Die oberen Ränder 20a der Segmente 20 haben vorzugsweise zum besseren Einführen und Verankern der Borstenbündel 58 eine flache obere Begrenzungsfläche. Die Segmente 20 werden zum Einführen der Borstenbündel 58 vorzugsweise seitlich und/oder horizontal fixiert.

Im selben Herstellungsschritt können aus demselben Material wie die Membran zusätzliche gummielastische Reinigungs- oder Massageelemente gebildet werden, die mit der Membran einstückig sind.

In einer alternativen, nicht dargestellten Ausführung erstrecken sich die Verbindungselemente 42 auch über die gesamte Höhe der Segmente. Hierdurch ergibt sich eine andere Beweglichkeit der Segmente 20. In diesem Fall kann auf einen formgebenden umlaufenden Rand 52a aus einer Hartkomponente 38 verzichtet werden. Es ist auch möglich, die Segmente 20 nicht vollflächig, sondern nur durch dünne Stege aus Hart- oder Weichkomponente zu verbinden. Damit entstehen Kopfstrukturen mit Öffnungen zwischen den einzelnen Segmenten 20. Die Flexibilität des Kopfes kann dadurch gezielt beeinflusst werden.

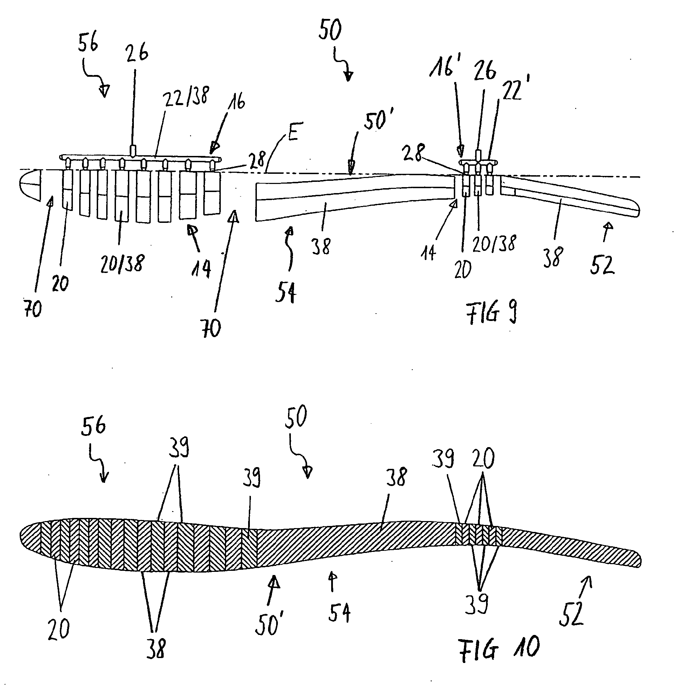

Fig. 9 zeigt eine weitere nach dem erfindungsgemässen Verfahren hergestellte (noch nicht fertige) Zahnbürste 50 im Längsschnitt nach dem Spritzen der ersten Komponente 38 des Körpers 50'. Zur Herstellung der ersten Komponente 38 wird eine erste Form verwendet, die im Wesentlichen wie in Fig. 1-3 gezeigt ausgebildet ist und aus drei Teilformen besteht (hier nicht dargestellt). Die Berührungsfläche zwischen der zweiten und der dritten Teilform hat vorliegend die Form einer Ebene und ist mit E bezeichnet.

Bei der herzustellenden Zahnbürste 50 sind sowohl im Griffbereich 56 als auch im Halsbereich 54 einzelne Segmente 20 ausgebildet. Die Segmente 20 im Griffbereich 56 können die Form von in Querrichtung verlaufenden Balken haben. Die Segmente 20 im Halsbereich 54 sind balkenartig und dienen im fertigen Zustand in Verbindung mit der Weichkomponente als elastische Biegezone. Die zweiten Hohlbereiche 14 gliedern sich daher in zwei Gruppen, die die komplementäre Form zu den Segmenten 20 im Griffbereich 56 bzw. Halsbereich 54 haben. Die Segmente 20 im Griffbereich 56 sind über ein erstes Verteilerelement (erstarrtes Material 22) aus der ersten Komponente 38 miteinander verbunden, das die komplementäre Form des dritten Hohlbereichs 16 hat. Dieser wird über einen Anspritzpunkt 26 mit der ersten Komponente 38 versorgt, so dass Material in die zweiten Hohlbereiche 14 geleitet wird, dort als Segmente 20 und im dritten Hohlbereich 16 als Material 22 erstarrt. Die Segmente 20 im Halsbereich 54 sind über ein weiteres Verteilerelement (erstarrtes Material 22') aus der ersten Komponente 38 miteinander verbunden, das einem weiteren dritten Hohlbereich 16' entspricht. Dieser wird über einen weiteren Anspritzpunkt 26' mit der ersten Komponente 38 versorgt.

Beim vorliegenden Beispiel liegen die Öffnungen 28 zwischen den zweiten und dritten Hohlbereichen 14, 16 in der Trennebene E. Dieses erleichtert das Entformen, insbesondere das Abtrennen der dritten Teilform und der Verteilerelemente (22, 22'), sowie die Herstellung der Teilform.

Allerdings entspricht die Lage der Segmente 20 relativ zueinander und zu den übrigen Bereichen aus erster Komponente 38 (Teil des Halsbereichs 54, Kopfbereich 52) nicht dem angestrebten Endzustand. Beim fertigen Körper 50', der in Fig. 10 im Schnitt gezeigt ist, sind im Griffbereich 56 die Lücken 70 zwischen den Segmenten 20 und den übrigen Bereichen verringert und die Abstände der Segmente 20 untereinander vergrössert. Des weiteren wurden einige dieser Segmente 20 und die Segmente 20 im Halsbereich 54 in der Zeichnungsebene senkrecht zur Trennebene E verschoben, damit sich ihre Konturen der Kontur der Zahnbürste 50 mit einem leicht geschwungenen Körper 50' anpassen.

Die beschriebene Umlagerung der Segmente 20 relativ zu den übrigen Bereichen aus erster Komponente 38 erfolgt nach dem Abtrennen der Verteilerelemente (22, 22') beim Wechsel zwischen erster und zweiter Form 10, 40. Vorzugsweise wird eine geeignete Handhabungseinheit verwendet; die Segmente 20 können aber auch einfach in entsprechende Aussparungen in der zweiten Form fallengelassen werden.

Fig. 10 zeigt den fertigen Körper 50' derselben Zahnbürste 50 nach erfolgter Umlagerung der Segmente 20 und nach dem Spritzen der zweiten Komponente 39. Durch die zweite Komponente 39, die hier eine Weichkomponente ist, sind die Segmente 20 federnd eingebettet und mit den übrigen Bereichen aus der ersten Komponente 39 zu einem zusammenhängenden Körper 50' verbunden. Dieser wird anschliessend im Kopfbereich 52 in bekannter Weise beborstet.

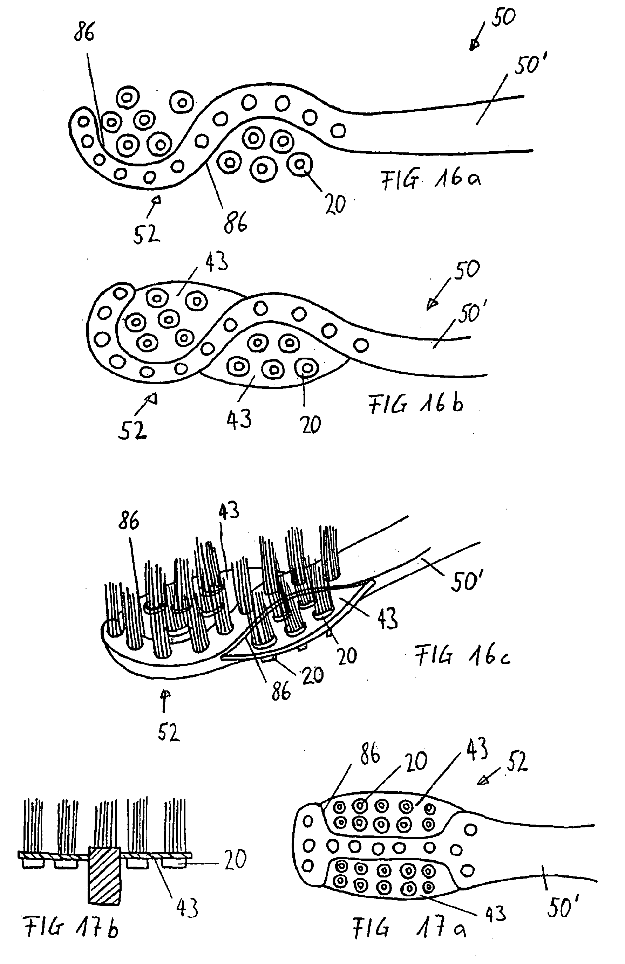

Fig. 11-17 zeigen weitere Varianten von Zahnbürsten 50 bzw. Trägerelementen 68 für Zahnbürsten 50, die mit dem erfindungsgemässen Verfahren hergestellt wurden. Bei den Beispielen aus Fig. 11a-e, Fig. 12a-e und Fig. 13-15 werden zunächst Trägerelemente 68 mit dem erfindungsgemässen Verfahren hergestellt, beborstet und anschliessend mit einem separat hergestellten Körper 50' verbunden. Bei den Beispielen aus Fig. 16 und 17 wird der gesamte Bürstenkörper 50' mit dem erfindungsgemässen Verfahren hergestellt und anschliessend beborstet.

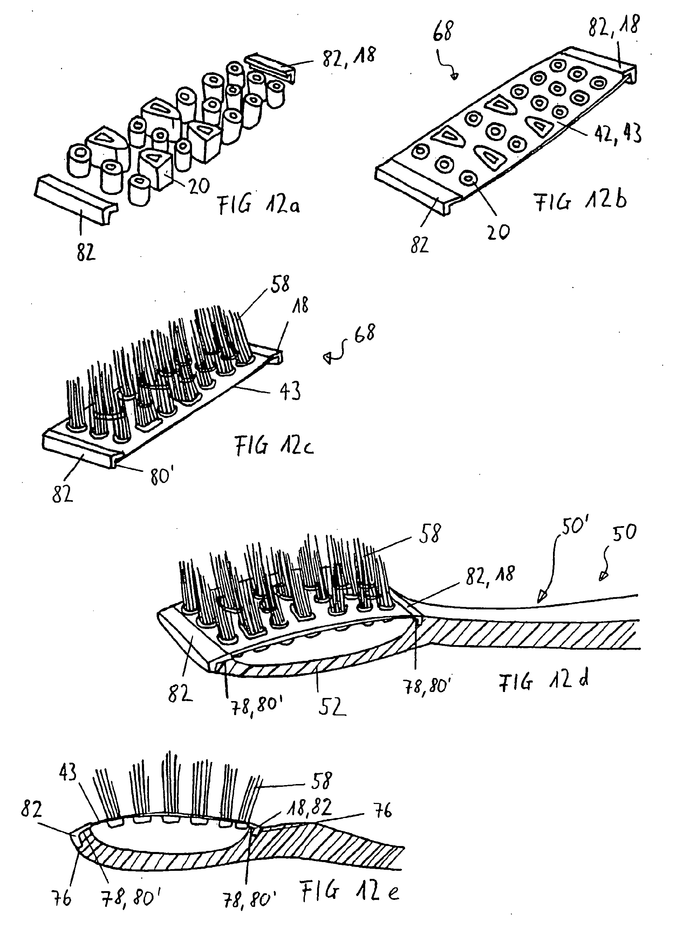

Bei den Beispielen aus Fig. 11a-e, Fig. 12a-e und Fig. 13-15 werden in einem ersten Schritt eine Mehrzahl von hülsenförmigen Segmenten 20 und die übrigen Bereiche 18 des Trägerelements 68 aus der ersten Komponente 38, insbesondere einer Hartkomponente hergestellt. In einem weiteren Schritt werden Verbindungselemente 42 in Form einer Membran 43 angespritzt. Die Membran 43 ist in einer Richtung senkrecht zum Trägerelement 68 dünner als die Segmente 20, die beidseitig aus der Membran 43 herausragen können (siehe Fig. 11e, 12e). Die Segmente 20 können grundsätzlich jede beliebige Form haben, sind aber vorzugsweise hülsen- oder becherförmig und senkrecht zum Trägerelement 68 ein- oder beidseitig offen. Die Querschnittsfläche der Segmentöffnungen ist bei konventioneller Beborstung durch Stopfen vorzugsweise elliptisch, wie in Fig. 11b links gezeigt. Bei konventioneller Beborstung werden Segmente 20 mit einseitigen Öffnungen hergestellt (z.B. wie in Fig. 7a, b) .

Bei AFT-Beborstung können beliebige andere Querschnittsöffnungen realisiert werden, z.B. achtförmig oder nierenförmig, wie in Fig. 11b Mitte und rechts gezeigt. Die Segmente 20 haben durchgehende kanalartige Öffnungen 72, durch die nach der Herstellung des Trägerelements 68 Borstenbündel 58 durchgeführt werden können. Diese werden anschliessend an ihren rückwärtigen Enden aufgeschmolzen, um sie am Trägerelement 68 zu verankern.

Im Beispiel von Fig. 11a-e bilden die übrigen Bereiche 18 einen elliptischen geschlossenen Rand 74 (ähnlich dem umlaufenden Rand 52a), an den weitere Hülsen 76 (ähnlich den weiteren Hülsen 52b) direkt angeformt sind. Diese dienen wie die Segmente 20 zur Befestigung von Borsten und sind ein- oder beidseitig geöffnet. Innerhalb des Randes 74 befinden sich mehrere Segmente 20 unterschiedlicher Form und Grösse. Sie sind untereinander und mit dem Rand 74 durch die Membran 43 verbunden. Vorzugsweise ist die Membran 43 elastisch, so dass eine elastische Borstenverankerung realisiert wird.

Das Trägerelement 68 wird anschliessend konventionell oder mittels AFT mit Borsten 58 versehen (Fig. 11d).

In einem separaten Arbeitsgang wurde ein Bürstenkörper 50' hergestellt, der die Form eines Löffels mit einer Einbuchtung im Kopfbereich 52 hat (Fig. 11c). Im Kopfbereich 52 bzw. am Rand der Einbuchtung ist eine umlaufende Kante 78 gebildet, an die eine Aussenkante 80 des Trägerelements 68 zur Anlage kommt. Entlang der Linie 78/80 werden Trägerelement 68 und Körper 50' vorzugsweise durch Verschweissen unlösbar miteinander verbunden (Fig. 11e).

Die Schweissfläche kann partiell durch Öffnungen oder andere Materialien, insbesondere Weichmaterialien, unterbrochen sein. Vorteilhaft sind auch Varianten, in denen durch eine lösbare Verbindung der übrigen Bereiche 18 mit dem Körper 50' eine Wechselkopfzahnbürste realisiert wird.

Im Beispiel von Fig. 12a-e werden in einem ersten Verfahrensschritt eine Mehrzahl von hülsenförmigen Segmenten 20 sowie zwei gerade, im Querschnitt L-förmige Materialstücke 82 aus der ersten Komponente 38, einer Hartkomponente, hergestellt (Fig. 12a). Die Materialstücke 82 können mit den "übrigen Bereichen" 18 identifiziert werden. Eine Membran 43 wird als Verbindungselement 42 zwischen den Materialstücken 82 und den Segmenten 20 gespritzt (Fig. 12b). Das so hergestellte Trägerelement 68 wird anschliessend konventionell oder mittels AFT beborstet (Fig. 12c). Ein separat hergestellter Bürstenkörper 50' ist im Kopfbereich 52 zu einer tragenden Struktur gebogen und weist zwei in Querrichtung verlaufende, als Verankerungsstellen für das Trägerelement 68 und somit indirekt für die Membran 43 dienende Kanten 78 auf. An diesen werden die länglichen Materialstücke 82 vorzugsweise mittels Verschweissen befestigt. Die Unterseite 80' der Materialstücke 82 ist dabei an die Kante 78 angepasst.

Das zuvor ebene Trägerelement 68 kann unter Vorspannung mit dem Kopfbereich 52 des Körpers 50' verbunden werden, so dass es sich aufwölbt und eine kissenartige Struktur entsteht, bei der die Borsten 58 besonders federnd aufgehängt sind (Fig. 12d+e). Der Kopfbereich 52 kann seitlich offen sein, wie in Fig. 12d gezeigt, oder analog zu Fig. 11 seitlich geschlossen, jedoch ohne seitliche Schweissnaht. Das Trägerelement 68 kann auch bereits vor dem Einsetzen in den Körper 50' gebogen sein, z.B. indem die Membran 43 entsprechend gebogen hergestellt wird oder indem sie beim oder nach dem Beborsten z.B. durch einen gebogenen AFT Stempel thermoplastisch verformt wird.

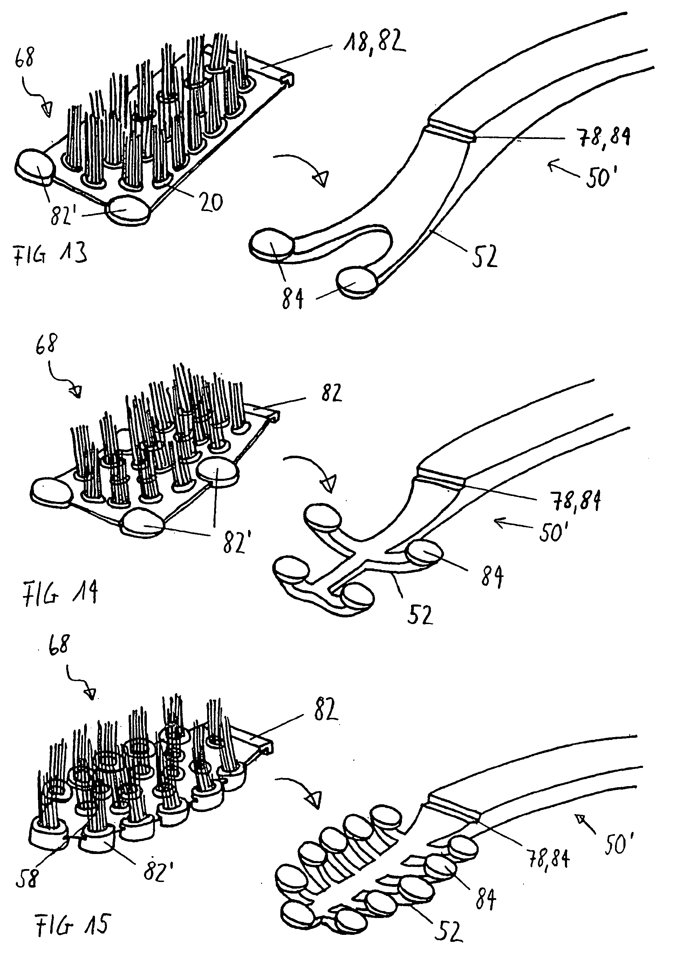

Fig. 13, 14 und 15 zeigen Varianten der in Fig. 12 gezeigten Zahnbürste 50. Der Bürstenkörper 50' ist im Kopfbereich 52 gebogen, zum vorderen Ende hin ein- oder mehrfach zu einer skelettartigen tragenden Struktur verzweigt und weist zwei, vier bzw. elf tellerförmige, je am Ende eines Zweiges ausgeformte Verankerungsstellen 84 auf. Eine weitere Verankerungsstelle 84 ist, wie bei Fig. 12d+e, in Form einer länglichen Kante 78 beim Übergang von Kopfbereich 52 zum Halsbereich 54 gebildet. Das entsprechende Trägerelement 68 hat, wie bei Fig. 12b+c, ein längliches Materialstück 82 an einem Ende, sowie entsprechend den Verankerungsstellen 84 verteilt, zwei, vier, bzw. elf tellerartige Materialstück 82', zwischen denen sich die Membran 43 befindet. Diese können ausschliesslich zur Verankerung des Trägerelements 68 am Bürstenkörper 50' dienen (Fig. 13+14) oder zusätzlich selber auch Borstenbündel 58 tragen (Fig.15). Je nach Anordnung der Verankerungsstellen 84 und der Materialstücke 82, 82' wird die Membran 43 ohne Spannung mit dem Körper 50' verbunden, in die Länge bzw. Breite gezogen oder aufgewölbt. Je mehr Verankerungsstellen 84 bestehen, desto mehr Variationsmöglichkeiten gibt es hinsichtlich der Membranform und damit der elastischen Eigenschaften der Borstenaufhängung. Die Verankerung zwischen den Haltestellen wird vorzugsweise mittels Ultraschall vollzogen. Dabei können Kanten des Trägerelementes 68 in Nuten der Haltestellen form- und kraftschlüssig eingreifen.

Fig. 16a-c und 17a+b zeigen zwei Beispiele für eine Zahnbürste 50, bei der die Hartkomponente des gesamten Bürstenkörpers 50' und die becherförmigen Segmente 20 in einem Arbeitsgang gespritzt werden. Die Hartkomponente des gesamten Bürstenkörpers 50' ist insbesondere im Kopfbereich 52 derart gebogen gestaltet, dass gebogene Randflächen 86 gebildet werden, die als seitliche Begrenzung und Verankerung für eine Membran 43 dienen. Unter "gebogen" werden dabei auch Randflächenstücke verstanden, die gerade verlaufen, aber zueinander winklig angeordnet sind (siehe Fig. 17a). Bei Fig. 16a-c ist die Hartkomponente in der Aufsicht S-förmig gebogen. Die Membran 43 ist in zwei Unterbereiche untergliedert, die sich jeweils zwischen einem Bogen der S-Struktur befinden. Bei Fig. 17a, b hat die Hartkomponente in der Aufsicht eine H-förmige Struktur. Die Membran 43 ist wiederum in zwei Unterbereiche untergliedert, die sich jeweils - in Draufsicht gesehen - oberhalb bzw. unterhalb der Bürstenlängsachse befinden. Die Segmente 20 haben die Form von unten geschlossenen Bechern und sind an ihrem oberen Rand in die im Verhältnis zur Bechertiefe dünne Membran 43 eingebettet (siehe Fig. 17b). Derartige Bürstenköpfe werden konventionell beborstet, da der mit den Segmenten 20 versehene Kopfbereich 52 einstückig mit dem restlichen Bürstenkörper 50' geformt ist. Tragende Strukturen wie die gezeigte S- oder H-Form können jedoch auch bei separat hergestellten Trägerelementen 68 wie in Fig. 11-15 zum Einsatz kommen.

Als AFT Bürstenköpfe eingesetzte Trägerelemente 68 werden in der Regel aus derselben Hartkomponente gefertigt wie der Bürstenkörper 50', um eine einwandfreie Verschweissung mit dem Bürstengriff zu gewährleisten. Als Hartkomponente wird vorzugsweise Polypropylen (PP) eingesetzt. Als Weichkomponente wird vorzugsweise ein sich mit PP verbindendes, d.h. affines, thermoplastisches Elastomer (TPE) eingesetzt. Dieses TPE wird zur Schaffung flexibler Bereiche des AFT Kopfes und/oder zur Gestaltung von gummielastischen Reinigungselementen vorgesehen. Mittels dem AFT Verfahren werden anschliessend konventionelle Borsten mit einem Durchmesser von 0,1 - 0,25 mm auf dem AFT Bürstenkopf mittels Aufschmelzen der Borsten auf der AFT Bürstenkopfrückseite verankert, z.B. wie in EP 1136016 beschrieben. Konventionelle Borsten bestehen vorzugsweise aus einem Thermoplast, vorzugsweise aus Polyamid. (PA) oder Polyester (PBT). Dieses Aufschmelzen der Borsten ergibt einen Schmelzteppich, der im wesentlichen bis 1 mm dick und an den Rändern durch Materialverdrängung etwas höher ist. Dieser Schmelzteppich aus dem Material der Borsten ist spröde. Zudem verbindet sich die Borstenschmelze durch das Aufschmelzen nicht mit der Bürstenkopfplatte, in den gezeigten Beispielen mit den Segmenten 20, die gegebenenfalls am Trägerelement 68 angeordnet sind. Dies hat insbesondere bei einer flexiblen Aufhängung des AFT Bürstenkopfes den Nachteil, dass sich die Borstenschmelze von der AFT Bürstenkopfplatte trennen kann und sogar in einzelne Teilbereiche zerbrechen kann.

Dies hat einige negative Folgen für die Qualität der AFT Bürstenköpfe:
a) Wasser kann durch die Öffnungen in den Hohlraum eintreten, was zu hygienischen Problemen führen kann.
b) Das Auszugsgewicht der Borsten und Borstenbündel 58 wird verringert, da der Borstenteppich in kleine Einzelbereiche zerfallen kann. Falls ein Einzelteil so klein wie ein Bündelquerschnitt wird, besteht keine Rückhaltewirkung mehr.
c) Bei Bürstenköpfen mit hinten offenen Strukturen können die Borsten nach hinten aus der Kopfplatte fallen.

Zur Lösung dieser Probleme wird vorgeschlagen, die Borsten oder den Bürstenkopf vor dem Aufschmelzen so zu behandeln, dass durch das Aufschmelzen während dem AFT Prozess eine Haftung zwischen der AFT Kopfplatte und den Borsten entsteht. Um dies zu erreichen, stehen verschiedene Möglichkeiten zur Verfügung:

In einer ersten Variante wird ein Additiv in das Material der AFT Kopfplatte beigegeben, welches eine Haftung zwischen dem Material der Kopfplatte und den konventionellen Borsten bewirkt. Hier gibt es sogenannte Haftvermittler, welche während dem Spritzgussprozess der AFT Kopfplatte beigemischt werden können oder bereits im Spritzgussgranulat enthalten sind. Beim Aufschmelzen der Borsten auf der AFT Kopfplattenrückseite entsteht dann eine Verbindung/Adhäsion des Schmelzteppichs und der Borstenplatte. Falls im AFT Bürstenkopf auch Weichmaterial enthalten ist, wie z.B. bei den oben beschriebenen Trägerelementen 68 mit einer Membran 43, kann der Haftvermittler auch dem Weichmaterial beigemischt werden. Dieser entspricht natürlich wie beim Hartmaterial dem entsprechenden Borstenmaterial.

Materialbeispiel 1: Polypropylen PP der Kopfplatte enthält ein Additiv (Haftvermittler) für Polyamid PA. Beim Aufschmelzen der PA Borsten geht die Borstenschmelze eine Verbindung mit dem PP der Kopfplatte ein. Da der Bürstengriff (Bürstenkörper 50') ebenfalls aus PP (ohne Haftvermittler) besteht, ist zu beachten, dass durch Beigabe des Haftvermittlers die Verschweissung mit dem Bürstengriff nicht negativ beeinflusst wird.

Materialbeispiel 2: Polypropylen PP der Kopfplatte enthält ein Additiv (Haftmittel) für Polyester PBT. Beim Aufschmelzen der PBT Borsten geht die Borstenschmelze eine Verbindung mit dem PP der Kopfplatte ein. Da der Bürstengriff (Bürstenkörper 50') ebenfalls aus PP (ohne Haftvermittler) besteht, ist zu beachten, dass durch Beigabe des Haftvermittlers die Verschweissung mit dem Bürstengriff nicht negativ beeinflusst wird.

Als Haftvermittler werden möglichst kommerziell erhältliche Produkte eingesetzt, welche vor allem in der Herstellung von Verbundfolien oder Verbundrohren verwendet werden. Dabei handelt es sich z.B. um Maleinsäureanhydride (MSA), EVAC, EBA, SB/PE Blockcopolymerisat, SB/PP Blockcopolymerisat, SB-Blends, etc. Die Konzentration beträgt weniger als 5% vorzugsweise weniger als 1%.

Um die Kontaktfläche zwischen Borstenschmelze und AFT Bürstenkopf zu erhöhen, wird des weiteren vorgeschlagen, Vorsprünge und Vertiefungen in der Kopfplatte vorzusehen. Diese werden aber im Gegensatz zu WO99/11156 weder deformiert noch angeschmolzen. Vorzugsweise wird die Kopfplattenrückseite aufgeraut, zum Beispiel mit erodierten Strukturen mit einer maximalen Höhendifferenz von 0.5 mm, vorzugsweise 0.1 mm. Das Verfahren gemäss WO99/11156 hat den Nachteil, dass durch das Aufschmelzen des Platten- und Borstenmaterials ein relativ dicker Schmelzteppich entsteht, welcher die Flexibilität negativ beeinflusst. Durch das Durchmischen der Materialien entsteht ein undefiniertes Materialgemisch mit nicht definierbaren Eigenschaften.

In einer weiteren Variante wird der Haftvermittler dem Borstenmaterial beigegeben.

Materialbeispiel 3: Polypropylen PP der Kopfplatte. Beim Aufschmelzen der Polyamid PA Borsten, welche einen Haftvermittler für Polypropylen PP enthalten, geht die Borstenschmelze eine Verbindung mit dem PP der Kopfplatte ein.

In einer weiteren Variante wird die Kopfplatte vor dem AFT Prozess vorbehandelt. Bei Polypropylen kann z.B. mittels Corona Blitz oder Beflammung die Oberflächenspannung reduziert werden.

In einer weiteren Variante wird die Oberfläche der Kopfplatte vor dem AFT Prozess mit einem Mittel beschichtet oder besprüht, welches z.B. nach Art eines Katalysators beim Aufschmelzen der Borsten ebenfalls eine Verbindung/Adhäsion zwischen Kopfplatte und Borstenschmelze bewirkt. Bei diesem Mittel kann es sich um einen Klebstoff oder ebenfalls um einen Haftvermittler handeln.

Alle diese Varianten haben insbesondere bei AFT den Vorteil, dass nur die Trägerplatte vorbehandelt werden muss, welche nur eine kleine Fläche oder ein kleines Materialvolumen innehat. Der restliche Anteil der Zahnbürste, insbesondere der voluminöse und gewichtige Griff, kann konventionell hergestellt werden. Dadurch kann Material und Zeit gespart werden.

Insbesondere bei Bürstenköpfen, welche offen sind, d.h. bei denen die Borstenschmelze sichtbar ist (Fig. 12-15), ist es von Vorteil, diese durch einen weiteren Prozessschritt auf der AFT Anlage und vor dem Verschweissen mit dem Bürstengriff (Bürstenkörper 50') zu kaschieren, z.B. mit dem Aufschweissen eines dünnen Kunststoffelements, dem Aufbringen einer Kunststofffolie mittels Kleben oder mit dem Besprühen durch Farbe, Lack oder Kunstharz.

Dieser Vorgang kann die Borstenschmelze noch zusätzlich zu den oben erwähnten Massnahmen am AFT Bürstenkopf fixieren. Hierbei ist zu beachten, dass die zur Verschweissung mit dem Bürstengriff notwendigen Schweisskanten am AFT Bürstenkopf freigestellt sind.

Die obigen Vorschläge zur verbesserten Haftung der Borstenschmelze werden vorteilhaft bei den erfindungsgemäss hergestellten Trägerelementen 68 für die AFT Beborstung eingesetzt. Es besteht die Möglichkeit, dem Weichmaterial ebenfalls einen Haftvermittler beizugeben. Üblicherweise ist es jedoch ausreichend, der Hartkomponente Haftvermittler beizugeben. Die genannten Vorschläge können jedoch auch unabhängig vom oben beschriebenen Herstellungsverfahren bei anderen AFT Köpfen oder bei anderen Beborstungsverfahren wie IMT (EP 0346646) oder Verfahren gemäss EP 1312 281 eingesetzt werden.

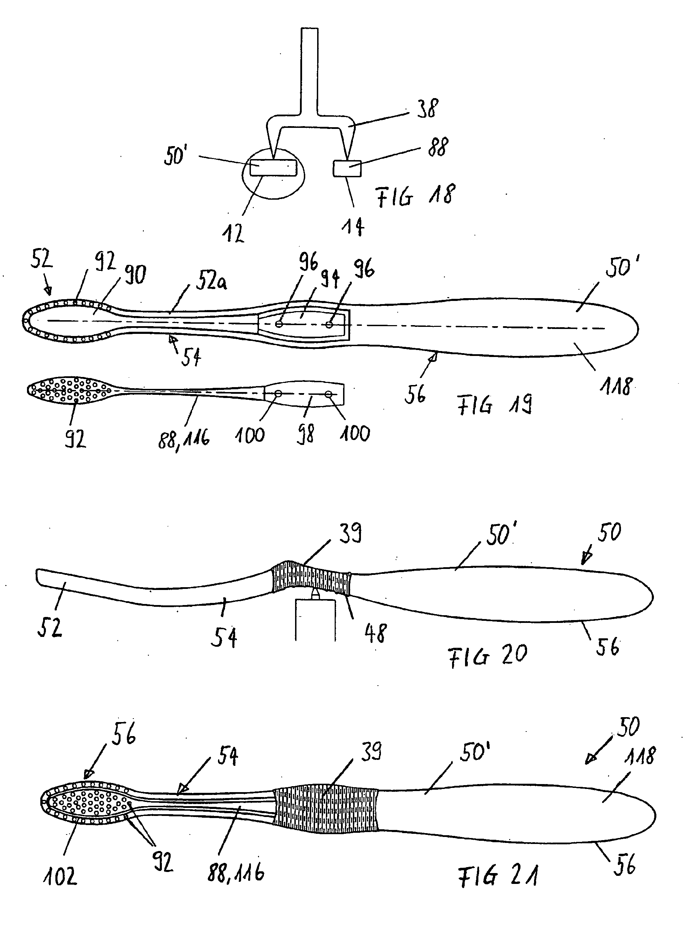

Die Fig. 18 bis 21 zeigen die Herstellung einer weiteren Zahnbürste 50 zu unterschiedlichen Zeitpunkten.

Wie Fig. 18 zeigt, werden in einem Spritzgiesszyklus aus einer ersten Komponente 38 zwei Teile 116, 118 der Zahnbürste 50, nämlich der Zahnbürstenkörper 50' und eine Zahnbürstenzunge 88, in den entsprechenden Hohlbereichen 12, 14 (Kavitäten) der ersten Form 10 hergestellt (vergleiche Fig. 1 - 5, 8, 19 - 21). Die Hohlbereiche 12, 14 können, wie in Fig. 18 gezeigt, aus einem Anguss über eine Angusspinne mit dem flüssigen Kunststoffmaterial versorgt werden. Es ist auch möglich, jeden Hohlbereich 12, 14 über einen eigenen Anguss zu speisen. Im ersten Fall bestehen die beiden Teile 116, 118 der Zahnbürste 50 aus demselben Kunststoff, einer Hartkomponente, und derselben Farbe. Im zweiten Fall können die beiden Teile 116, 118 aus unterschiedlichen Kunststoffen derselben oder unterschiedlicher Farbe, oder aus demselben Kunststoff unterschiedlicher Farbe bestehen.

Wie insbesondere aus der Fig. 19 hervorgeht, weist der einstückige Zahnbürstenkörper 50' einen Griffbereich 56, einen Halsbereich 54 und einen Kopfbereich 52 auf. Im Halsbereich 54 und Kopfbereich 52 weist der Zahnbürstenkörper eine von der Oberseite zur Unterseite durchgehende Ausnehmung 90 in der Form eines Löffels auf. Diese Ausnehmung 90 ist von einem umlaufenden Rand 52a umgeben, welcher einstückig am Griffbereich 56 angeformt ist. Im Kopfbereich 52 weist der Rand 52a eine Reihe von becherartigen Vertiefungen 92 auf, die auf der Oberseite offen, auf der Unterseite geschlossen und für die Aufnahme von Borstenbündeln 58 bestimmt sind. Sie werden im ersten Spritzgiesszyklus hergestellt.

Weiter weist der Zahnbürstenkörper 50' in einem vorderen, an den Halsbereich 54 anschliessenden Teil des Griffbereichs 56, auf der Oberseite, eine Aufnahmevertiefung 94 auf, welche mit zwei sacklochartigen Positionierungslöchern 96 versehen ist, welche auf der Längsmittelachse der Zahnbürste 50 hintereinander angeordnet sind.

Die Zahnbürstenzunge 88 hat, in Draufsicht gesehen, ebenfalls die Form eines Löffels. Sie ist derart geformt, dass sie in der Ausnehmung 90 Platz findet, wobei ein dünner Spalt 102 zwischen ihr und dem umlaufenden Rand 52a frei bleibt. Im Kopfbereich 52 ist die Zahnbürstenzunge 88 ebenfalls mit Vertiefungen 92 für die Aufnahme von Borstenbündeln 58 versehen. Im dem Kopfbereich 52 abgewandten Endbereich weist die Zahnbürstenzunge 88 einen plattenartigen Befestigungsbereich 98 auf, der zur Aufnahmevertiefung 94 gegengleich geformt und mit zwei stiftförmigen Positionierungsstummel 100 versehen ist, die den Positionierungslöchern 96 entsprechend angeordnet sind.

In einem nachfolgenden Verfahrensschritt werden der Zahnbürstenkörper 50' und die Zahnbürstenzunge 88 relativ zueinander bewegt (verschoben und gegebenenfalls gedreht), so dass die Zahnbürstenzunge 88 in die Ausnehmung 90 und der Befestigungsbereich 98 in die Aufnahmevertiefung 94 zu liegen kommen, wobei die Positionierungsstummel 100 mit den Positionierungslöchern 96 in Eingriff gelangen.

Wie in Fig. 20 angedeutet, werden der Zahnbürstenkörper 50' und die Zahnbürstenzunge 88 - in einem vierten Hohlbereich 48 einer zweiten Form 40 - mit einer zweiten Komponente 39, beispielsweise einer Weichkomponente, umspritzt. Die zweite Komponente 39 umgreift mantelartig den Zahnbürstenkörper 50' und die Zahnbürstenzunge 88 im Bereich der Aufnahmevertiefung 94 und des Befestigungsbereichs 98, wie dies auch Fig. 21 zeigt. Die Zahnbürstenzunge 88 ist in der Art eines einseitig eingespannten Biegebalkens gehalten und kann beim Putzen der Zähne federnd nachgeben.

Schlussendlich werden der Rand 52a und die Zahnbürstenzunge 88 nach allgemein bekannten, oben beschriebenen Verfahren beborstet.

Selbstverständlich ist es auch möglich, weitere Bereiche der Zahnbürste mit Weichmaterial zu versehen oder damit auszubilden, wie dies allgemein bekannt ist.

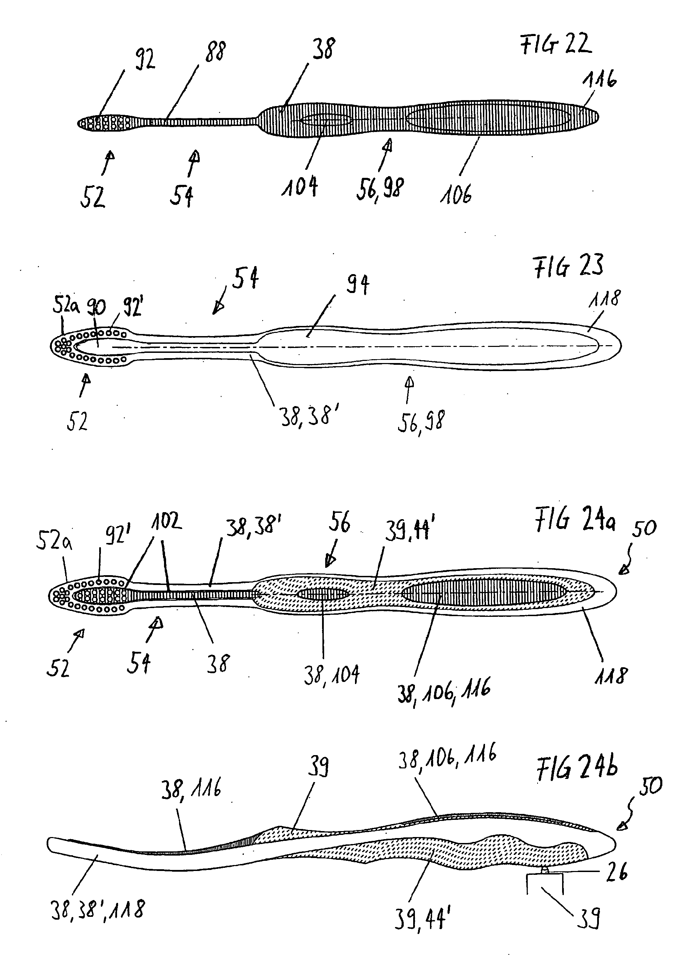

Die Fig. 22 bis 24b zeigen Teile 116, 118 einer weiteren Zahnbürste 50. Die Herstellung der Zahnbürste 50 basiert auf einem ähnlichen Vorgehen, wie zu den Fig. 18 bis 21 beschrieben worden ist.

Die Fig. 22 zeigt, ähnlich der in Fig. 19 gezeigten Ausführungsform, ein erstes Teil 116 mit integrierter Zahnbürstenzunge 88 in Draufsicht. Die Zahnbürstenzunge 88 hat, in Draufsicht gesehen, im Kopfbereich 52 und im Halsbereich 54 wiederum die Form eines Löffels. Sie ist derart geformt, dass sie in einer Ausnehmung 90 eines zweiten, in Fig. 23 gezeigten Teils 118 Platz findet, so dass im wesentlichen nurmehr ein dünner Spalt 102 zwischen ihr und dem umlaufenden Rand 52a des zweiten Teils 118 frei bleibt. Im Kopfbereich 52 ist die Zahnbürstenzunge 88 ebenfalls wiederum mit Vertiefungen 92 für die Aufnahme von Borstenbündeln 58 versehen.

Das erste Teil 116 ist bei der vorliegenden Ausführungsform aus einer ersten, eine erste Farbe aufweisenden Komponente 38, vorzugsweise einer Hartkomponente hergestellt.

Im Unterschied zur in der Fig. 19 gezeigten Ausführungsform der Zahnbürstenzunge 88 endet das erste Teil 116 der Zahnbürste 50 in der vorliegenden Ausführungsform nicht bereits im vordere Bereich des Griffbereichs 56, sondern es erstreckt sich weiter über einen wesentlichen Teil des Griffbereichs 56 und bildet hier den Befestigungsbereich 98.

Die Fig. 23 zeigt, ähnlich der in Fig. 19 gezeigten Ausführungsform, ein zweites Teil 118 mit einer ebenfalls löffelförmigen Ausnehmung 90 zur Aufnahme des ersten Teils 116 in Draufsicht. Das zweite Teil 118 ist, wie das erste Teil 116, bevorzugt einstückig gestaltet und weist ebenfalls einen Griffbereich 56, einen Halsbereich 54 und einen Kopfbereich 52 auf. Im Gegensatz zur in der Fig. 19 gezeigten Ausführungsform weist das zweite Teil 118 im Kopfbereich 52, Halsbereich 54 und im Griffbereich 56 eine von der Oberseite zur Unterseite durchgehende Ausnehmung 90 auf, welche zur Aufnahme des ersten Teils 116 bestimmt ist. Das zweite Teil 118 bildet demnach einen Rahmen, beziehungsweise eine Zahnbürstenrahmen für das erste Teil 116.

Die Ausnehmung 90 ist im Kopfbereich 52 begrenzt durch einen umlaufenden Rand 52a, welcher einstückig am Griffbereich 56 angeformt ist. Im Kopfbereich 52 weist der Rand 52a eine Reihe von becherartigen Vertiefungen 92 auf, die auf der Oberseite offen, auf der Unterseite geschlossen und für die Aufnahme von Borstenbündeln 58 bestimmt sind. Sie werden im ersten Spritzgiesszyklus hergestellt.

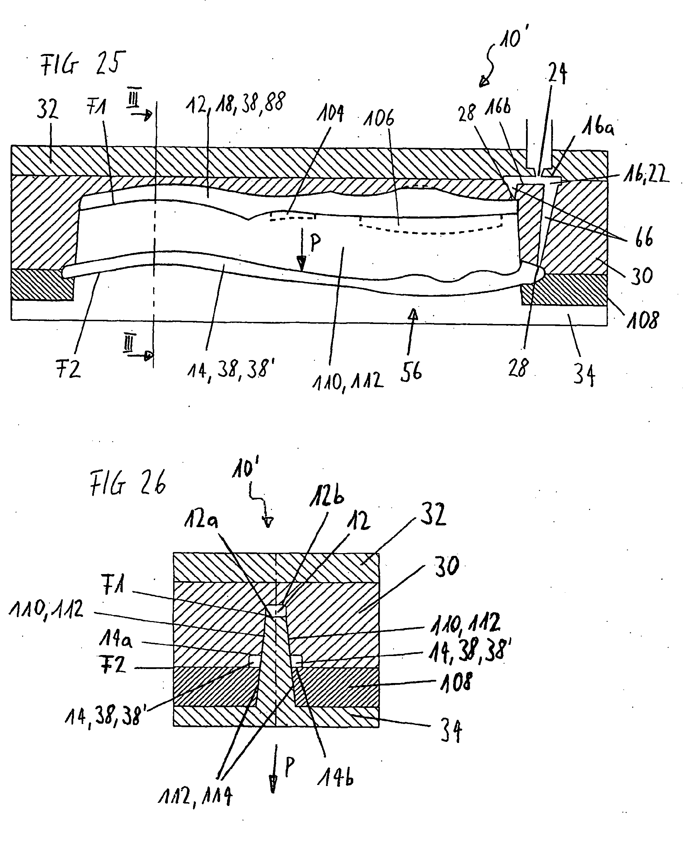

Das zweite Teil 118 ist bevorzugt im selben Spritzgiesszyklus wie das erste Teil 116 hergestellt, aber in einem separaten Hohlraum. In einer, in Fig. 25 gezeigten, weiteren Form 10' wird das zweite Teil 118 gleichzeitig im selben Werkzeug (Form 10') ebenfalls mit der ersten, eine erste Farbe aufweisenden Komponente 38, vorzugsweise einer Hartkomponente hergestellt. Es ist aber auch denkbar, dass das zweite Teil 118 aus einer zur ersten Komponente 38 unterschiedlichen Komponente 38' hergestellt wird, welche dieselbe oder eine unterschiedliche Farbe wie die erste Komponente 38 aufweist. Weiter ist es denkbar, dass die Komponente 38' aus demselben Material wie die Komponente 38 besteht, jedoch eine unterschiedliche Farbe aufweist.

Die Figuren 24a und 24b zeigen in Draufsicht und in Seitenansicht eine noch nicht mit Borsten bestückte Zahnbürste 50, bei welcher das erste Teil 116 von Fig. 22 in das zweite Teil 118 von Fig. 23 eingesetzt ist. Das erste Teil 116 ist bezüglich des zweiten Teils 118 dadurch fixiert, dass eine zweite Komponente 39, bevorzugt eine Weichkomponente, die beiden Teile 116, 118 partiell umfasst. Die zweite Komponente 39 wird in einem separaten, zweiten Spritzgiesszyklus bzw. Spritzgiess-vorgang aufgebracht. Die Fig. 24a zeigt daher einen zweiten Anspritzpunkt 26 auf der Hinterseite der Zahnbürste 50 im hinteren Griffbereich 56. Die mantelartige Fixierung mit der zweiten Komponente 39 erfolgte bevorzugt nur im Griffbereich 56, so dass die Zahnbürstenzunge 88 im Kopf- und Halsbereich 52, 54 frei bleibt. Dies hat zur Folge, dass die Zahnbürstenzunge 88 des ersten Teils 116 in Richtung der Ober- und Unterseite der Zahnbürste 50 dank des Spalts 102 relativ zum zweiten Teil 118 ausschwingen kann. Durch die Fixierung im Griffbereich 56 wird die Zahnbürstenzunge 88 des ersten Teils 116 in der Art eines einseitig eingespannten Biegebalkens gehalten und kann beim Putzen der Zähne federnd nachgeben, wodurch die Zahnbürste 50 besonders im zweiteiligen Kopfbereich 52 nachgiebig und anpassungsfähig wird, wodurch eine besonders schonende Zahnreinigung ermöglicht werden kann.

In der in den Fig. 24a und 24b gezeigten Ausführungsform sind das erste Teil 116 und das zweite Teil 118 nur partiell von der zweiten Komponente 39 umschlossen, so dass gewisse Bereiche des ersten Teils 116 und/oder des zweiten Teils 118 bei der fertiggestellten Zahnbürste 50 für den Kunden voll oder teilweise sichtbar bleiben. In der Fig. 22 sind beispielsweise eine erster Inselbereich 104 und ein zweiter Inselbereich 106 angedeutet, welche in der zusammengefügten Zahnbürste 50 in den Fig. 24a und 24b sichtbar bleiben. Das zweite Teil 118 ist in den Fig. 24a und 24b in der Form eines umlaufendes Bandes sichtbar.

Die Borstenfläche ist zweiteilig. Ein erster Teil der Beborstung befindet sich im Kopfbereich 52 des ersten Teils 116, während ein zweiter Teil der Beborstung im Kopfbereich 52 des rahmenartigen zweiten Teils 118 angeordnet ist.

Es ist denkbar, dass die zweite Komponente 39 aus demselben Material wie die erste Komponente 38 besteht, wobei sie die gleiche oder eine unterschiedliche Farbe wie die erste Komponente 38 aufweisen kann.

Die Fig. 25 und 26 zeigen ein Werkzeug für die Herstellung von den in den Fig. 22 und 23 gezeigten Teilen 116, 118 einer weiteren Ausführungsform der Zahnbürste 50.

Ähnlich der in den Fig. 1 bis 3 gezeigten mehrteiligen ersten Form 10 weist auch die in Fig. 25 gezeigte erste Form 10' eine erste Teilform 30, eine zweite Teilform 32 und eine dritte Teilform 34 auf. Dazu beinhaltet die erste Form 10' noch eine Indexplatte 108.

Ähnlich dem in der Fig. 8 gezeigten Werkzeug ist denkbar, dass sich die Indexplatte 108 und der Schieber 34 um eine Drehachse D drehen, während die erste Teilform 30 und die zweite Teilform 32 stationär angeordnet sind.

Die in der Fig. 25 gezeigte Form 10' ist im Längsschnitt dargestellt, wobei die dritte Teilform 34, in Form eines rippenförmigen Schiebers, zwecks besserer Darstellbarkeit nicht in Schnittdarstellung gezeigt ist. Vertiefungen zur Bildung des ersten Inselbereichs 104 und des zweiten Inselbereichs 106 sind gestrichelt dargestellt.

Aufgrund der geringen Grösse des Spalts 102 zwischen dem Zahnbürstenrahmen, bzw. dem zweiten Teil 118 zur Zahnbürstenzunge 88, bzw. zum ersten Teil 116, werden die beiden Teile 116, 118 zueinander versetzt in verschiedenen Trennflächen F1, F2 in der ersten Form 10' hergestellt. Die Fig. 26 ist eine Querschnittdarstellung durch die Schnittebene III-III der in der Fig. 25 gezeigten ersten Form 10 und dient zur Veranschaulichung der relative Versetzung der Kavitäten bzw. Hohlräume in den Trennflächen F1 und F2.

Im folgenden wird die Herstellung mit Bezug zu beiden Fig. 25 und 26 beschrieben.

Anschliessend an die zweite Teilform 32 ist die erste Teilform 30 angeordnet. Die erste Teilform 30 weist auf ihrer, der zweiten Teilform 32 abgewandten Seite eine V-förmige Ausnehmung mit zwei Seitenwänden 110 und einem U-förmigen Boden auf, welcher als Wandfläche 12b bezeichnet ist. Der unterste Teil der Seitenwände 110 und der Boden der V-förmigen Ausnehmung sind entsprechend zur Oberseite des ersten Teils 116 von Fig. 22 geformt.

Anschliessend an die erste Teilform 30 grenzt die Indexplatte 108. An diese Indexplatte 108 grenzt die dritte Teilform 34, welche nachfolgend Schieber 34 genannt wird. Dabei durchdringt der Schieber 34 die Indexplatte 108, welche ebenfalls zwei sich aufweitende, schräge, in den selben Ebenen wie die Seitenwände 110 liegende Seitenwände 114 aufweist, in einer oberen Endlage des Schiebers 34 derart, dass die Seitenwand 112 des Schiebers 34 sich formpassend an die Seitenwände 110, 114 der ersten Teilform 30 und der Indexplatte 108 schmiegt. In der oberen Endlage des Schiebers 34 bildet eine Stirnfläche des Schiebers 34 einen Wandbereich 12a und begrenzt damit den ersten Hohlbereich 12. Der Wandbereich 12a des Schiebers 34 definiert dadurch eine Trennfläche F1 des ersten Hohlbereichs 12. Die Wandfläche 12a weist die entsprechende Form der Oberseite des in Fig. 22 gezeigten ersten Teils 116 auf. Der erste Hohlbereich 12 weist die Form des ersten Teils 116 auf, welches die Zahnbürstenzunge 88 aufweist. Der Schieber 34 weist einerseits die Innenkontur vom zweiten Teil 118 und andererseits einen Teil der Aussenkontur in Form der Oberseite des ersten Teils 116 auf.

An der an die Indexplatte 108 grenzenden Peripherie der ersten Teilform 30 ist ein zweiter Wandbereich 14a angeordnet. Eine zweite Trennfläche F2 befindet sich zwischen der Indexplatte 108 und der ersten Teilform 30. Die Oberfläche der Indexplatte 108 im Bereich gegenüberliegend des ersten Wandbereichs 14a definiert einen zweiten Wandbereich 14b. Zusammen mit der Seitenwand 112 des Schiebers 34 begrenzen die Wandbereiche 14a und 14b den zweiten Hohlbereich 14. Der zweite Hohlbereich 14 weist die Form des zweiten Teils 118 auf, welcher den Zahnbürstenrahmen, bzw. den zweiten Teil 118 der Zahnbürste 50 bildet.

Weiter weist die zweite Teilform 32 einen ersten Anspritzpunkt 24 auf. Zwischen der ersten und der zweiten Teilform 30, 32 ist ein dritter Hohlbereich 16 durch einen, der zweiten Teilform 32 zugeordneten Wandbereich 16a, und einen der ersten Teilform 30 zugeordneten Wandbereich 16b begrenzt. Dieser dritte Hohlbereich 16 weist zwei Arme 66 auf, die über eine Durchtrittsöffnung 28 mit dem ersten Hohlbereich 12, beziehungsweise dem zweiten Hohlbereich 14 verbunden sind. Der dritte Hohlbereich 16 definiert die Angusspinne. Bei den mit der in der Fig. 25 dargestellten ersten Form 10' hergestellten Teile 116, 118 liegen die Anspritzpunkte jeweils auf der Hinterseite (bezogen auf die fertige Zahnbürste 50) der beiden Kunststoffteile 116, 118 im unteren Endbereich des Griffbereichs 56.

Beim ersten, in den Figuren 25 und 26 gezeigten Spritzgiesszyklus befindet sich der Schieber 34 in der oberen Endlage. Beim ersten Spritzgiesszyklus wird eine ersten Komponente 38, bestehend aus flüssigem Kunststoffmaterial, über den ersten Anspritzpunkt 24 in den dritten Hohlbereich 16 und über die Arme 66 je in die ersten und zweiten Hohlbereiche 12, 14 eingespritzt. In einem einzigen Spritzgiessvorgang werden also das erste und das zweite Teil 118 gleichzeitig gespritzt. In diesem Fall bestehen die beiden Teile 116, 118 der Zahnbürste 50 aus demselben Kunststoff, vorzugsweise einer Hartkomponente einer Farbe oder farblos.

Es ist auch möglich, jeden Hohlbereich 12, 14 über je einen eigenen Anguss zu speisen. Dabei können die beiden Teile 116, 118 aus unterschiedlichen Kunststoffen derselben oder unterschiedlicher Farbe, oder aus demselben Kunststoff unterschiedlicher Farbe gefertigt werden.

In einem anschliessenden Verfahrensschritt wird die zweite Teilform 32 von der ersten Teilform 30 entfernt, womit die Angusspinne aus erstarrtem Material 22 freigelegt wird und ähnlich dem vorgängig genannten Verfahren abgeführt wird.

In einem weiteren Verfahrensschritt wird der Schieber 34 in eine untere Endlage gebracht, so dass die Wandfläche 12a von der ersten Trennfläche F1 derart in einer Pfeilrichtung P verschoben wird, dass sie in die zweite Trennfläche F2 zu liegen kommt, welche im Wesentlichen bündig zur Wandfläche 14b der Indexplatte 108 verläuft. Somit bringt der Schieber 34 das erste Teil 116 mit dem Zungenkörper 88 in eine zweite Position für einen zweiten Spritzgiesszyklus, bei welchem sich das erste Teil 116 mit dem Zungenkörper 88 innerhalb des zweiten Teils 118 (dem Zahnbürstenrahmen) befinden muss.

Anschliessend wird die erste Teilform 30 mit der zweiten Teilform 32 vom Schieber 34 und der Indexplatte 108 entfernt, wobei die beiden gefertigten Teile 116, 118 in einem vorderen Bereich der Indexplatte 108 gehalten werden. Danach werden die Indexplatte 108 und der in sie hineingesteckte Schieber 34 zusammen - ähnlich dem in Fig. 8 gezeigten Werkzeug - um eine Drehachse D weggedreht. Dadurch wird das erste, in das zweite Teil 118 geschobene Teil 116 in einen weiteren Hohlbereich, bzw. eine neue, weitere Teilform 46 (nicht gezeigt) bewegt. Die Bewegung wird durch die Indexplatte 108 ausgelöst. Während dieser Drehbewegung werden die beiden Teile 116, 118 in einem vorderen Bereich der Indexplatte 108 gehalten.

Beim zweiten Spritzgiesszyklus wird das erste, (den Zungenkörper 88 aufweisende) mit dem zweiten (den Zahnbürstenrahmen bildenden Teil 118), ineinander verschobene Teil 116 verbunden, indem sie im ineinandergeschobenen Zustand vorzugsweise einzig im Griffbereich 56 mit einem Kunststoff einer zweiten (bzw. dritten) Komponente 39 mantelartig umspritzt, bzw. partiell mantelartig umspritzt werden. Die Umspritzung erfolgt dabei bevorzugt durch eine Weichkomponente.

Nach dem Herausformen werden der Rand 52a des zweiten Teils 118 und die Zahnbürstenzunge 88 des ersten Teils 116 nach allgemein bekannten, oben beschriebenen Verfahren beborstet, wonach der Herstellungsprozess der Zahnbürste 50 abgeschlossen ist.

Die drei Teile, bzw. die ersten zwei Teile 116, 118 und die Umspritzung können also somit aus drei verschiedenen Komponenten 38, 38', 39 hergestellt werden. Das heisst, dass eine Kombination aus Hart- und/oder Weichkomponenten realisiert werden kann. So können beispielsweise die ersten beiden Teile 116, 118 aus einer Hartkomponente hergestellt werden, während die Umspritzung mit einer Weichkomponente erfolgt. Durch eine Variation der Komponenten und der Art der Anspritzung (separate Angüsse oder Angusspinne) können auch verschiedenste Farbkombinationen realisiert werden.

Selbstverständlich ist es auch möglich, weitere Bereiche der Zahnbürste 50 mit Weichmaterial zu versehen oder damit auszubilden, wie dies allgemein bekannt ist.

Es ist weiter denkbar, dass in einer nicht gezeigten Ausführungsform auch der Halsbereich 54 mit der zweiten Komponente 39 umspritzt wird. Dies resultiert in einer gegenüber der obigen Ausführungsform geringeren Auslenkung.

Es ist aber auch denkbar, dass sich der Befestigungsbereich 98 vom ersten Teil 116 und die entsprechende Ausnehmung 90 im zweiten Teil 118 nur über einen Teil des Griffbereichs 56, beispielsweise nur über die Hälfte oder nur über einen Drittel der Länge des Griffbereichs 56 (vom vorderen, an den Halsbereich 54 anschliessenden Endbereich her gesehen) erstreckt.

## Patentansprüche

1. Verfahren zur Herstellung einer Zahnbürste (50) mit einem Körper, der wenigstens einen Griffbereich (56), einen Halsbereich (54) und einen Kopfbereich (52) umfasst, im Zwei- oder Mehrkomponenten-Spritzgiessverfahren, wobei der Körper zumindest teilweise aus wenigstens einer ersten und einer zweiten Komponente (38, 39) besteht und wobei die erste Komponente (38) wenigstens ein Segment (20) aufweist, das von übrigen Bereichen (18) aus der ersten Komponente (38) getrennt ist, mit folgenden Schritten:
- Bereitstellen einer ersten Form (10) mit ersten Hohlbereichen (12), die den aus der ersten Komponente (38) herzustellenden übrigen Bereichen (18) des Körpers entsprechen und denen die erste Komponente (38) zuführbar ist, mit zweiten Hohlbereichen (14), die dem wenigstens einen aus der ersten Komponente (38) herzustellenden Segment (20) entsprechen und die von den ersten Hohlbereichen (12) vollständig getrennt und gegebenenfalls untereinander beabstandet sind, sowie mit wenigstens einem dritten Hohlbereich (16), dem die erste Komponente (38) zuführbar ist und der mit den zweiten Hohlbereichen (14) derart in Verbindung steht, dass dem dritten Hohlbereich (16) zugeführtes Material ausschliesslich den zweiten Hohlbereichen (14) zugeführt wird;
- Bereitstellen einer zweiten Form (40) mit vierten Hohlbereichen (48), die sich zumindest im Bereich um das wenigstens eine Segment (20) befinden;
- Spritzgiessen der übrigen Bereiche (18) des Körpers durch Zufuhr der ersten Komponente (38) zu den ersten Hohlbereichen (12);
- Spritzgiessen des wenigstens einen Segments (20) in den zweiten Hohlbereichen (14) durch Zufuhr der ersten Komponente (38) in den dritten Hohlbereich (16);
- Entfernen des im dritten Hohlbereich (16) zurückgebliebenen erstarrten Materials (22);
- Wechseln der Form;
- Spritzgiessen von Verbindungselementen (42, 43) zwischen dem wenigstens einen Segment (20) und/oder den übrigen Bereichen (18) des Körpers durch Zufuhr der zweiten Komponente (39) zur zweiten Form (40).

2. Verfahren nach Anspruch 1, **dadurch gekennzeichnet, dass** die erste Komponente (38) eine Hartkomponente und die zweite Komponente (39) eine Hart- oder eine Weichkomponente ist.

3. Verfahren nach Anspruch 2, **dadurch gekennzeichnet, dass** die Hartkomponente aus Styrolacrylnitril (SAN), Polyethylenterephthalat (PET), Polyethylen (PE), Polymethylmethacrylat (PMMA), Acrylbutadienstyrol (ABS), Polypropylen (PP) besteht.

4. Verfahren nach Anspruch 2 oder 3, **dadurch gekennzeichnet, dass** die Weichkomponente aus einem gummielastischen Werkstoff, vorzugsweise einem thermoplastischen Elastomer (TPE) besteht, z.B. Polyurethan (PUR).

5. Verfahren nach einem der vorangegangenen Ansprüche, **dadurch gekennzeichnet, dass** die räumliche Lage der Segmente (20) relativ zueinander und/oder relativ zu den übrigen Bereichen (18) des Körpers vor dem Spritzgiessen der zweiten Komponente (39) verändert wird, insbesondere durch Translation und/oder Rotation.

6. Verfahren nach einem der vorangegangenen Ansprüche, **dadurch gekennzeichnet, dass** eine Mehrzahl von Segmenten (20) im Kopfbereich (52) vorgesehen wird, wobei Borstenbündel (58) vor dem Spritzgiessen der ersten Komponente (38) in die erste Form (10) eingeführt und bei der Herstellung der Segmente (20) von diesen durch Umspritzen fixiert werden oder beim Spritzgiessen der zweiten Komponente (39) durch diese in oder an den Segmenten (20) fixiert werden oder nach dem Spritzgiessen der ersten und der zweiten Komponente (38, 39) in den Segmenten (20) fixiert werden.

7. Verfahren nach einem der vorangegangenen Ansprüche, **dadurch gekennzeichnet, dass** die erste Form (10) durch wenigstens drei Teilformen (30, 32, 34) gebildet wird, wobei der erste und der zweite Hohlbereich (12, 14) zwischen einer ersten und einer zweiten Teilform (30, 32) und der dritte Hohlbereich (16) zwischen der zweiten Teilform (32) und einer dritten Teilform (34) gebildet wird.

8. Verfahren nach Anspruch 7, **dadurch gekennzeichnet, dass** die zweite und dritte Teilform (32, 34) zum Entfernen des im dritten Hohlbereich (16) zurückgebliebenen erstarrten Materials (22) zusammen von der ersten Teilform (30) wegbewegt werden.

9. Verfahren nach Anspruch 7 oder 8, **dadurch gekennzeichnet, dass** die erste Teilform (30) zum Wechseln der Form mit einer weiteren Teilform (46) zusammengefügt wird, mit der zusammen sie die zweite Form (40) bildet.

10. Verfahren nach einem der Ansprüche 1 bis 5, **dadurch gekennzeichnet, dass** mehrere voneinander getrennte Segmente (20) hergestellt werden, indem die erste Form (10) mehrere untereinander beabstandete zweite Hohlbereiche (14) aufweist.

11. Verfahren nach Anspruch 10, **dadurch gekennzeichnet, dass** vor, nach oder während dem Spritzgiessen der Verbindungselemente (42, 43) Borsten an das wenigstens eine Segment (20) und/oder die übrigen Bereiche (18) angebracht werden, vorzugsweise durch konventionelles Stopfen, im Anchor Free Tufting (AFT) Verfahren oder im In Mould Tufting (IMT) Verfahren.

12. Verfahren nach Anspruch 10 oder 11, **dadurch gekennzeichnet, dass** das wenigstens eine Segment (20), die übrigen Bereiche (18) sowie die Verbindungselemente (42, 43) so geformt werden, dass ein Trägerelement (68) für Borsten und/oder andere Reinigungselemente ausgebildet wird, das mit einem separat hergestellten Körper (50') verbunden, insbesondere verschweisst wird.

13. Verfahren nach Anspruch 12, **dadurch gekennzeichnet, dass** die Verbindungselemente (42) in Form einer Membran (43) ausgebildet werden, in die das wenigstens eine Segment (20) eingebettet ist, und dass die übrigen Bereiche (18) am Rand der Membran (43) diese ganz oder teilweise umschliessend ausgebildet werden.

14. Verfahren nach Anspruch 13, **dadurch gekennzeichnet, dass** das Trägerelement (68) beborstet wird, vorzugsweise im AFT-Verfahren oder durch konventionelles Stopfen, und dass das beborstete Trägerelement (68) mit dem separat hergestellten Körper (50') verbunden wird, indem wenigstens die übrigen Bereiche (18) wenigstens teilweise mit dem Körper (50') verbunden, vorzugsweise verschweisst werden.

15. Vorrichtung zur Durchführung des Verfahrens nach einem der vorangegangenen Ansprüche mit
- einer ersten Form (10) mit ersten Hohlbereichen (12), die den aus der ersten Komponente (38) herzustellenden übrigen Bereichen (18) des Körpers entsprechen und denen die erste Komponente (38) zuführbar ist, mit untereinander beabstandeten und von den ersten Hohlbereichen (12) vollständig getrennten zweiten Hohlbereichen (14), die den aus der ersten Komponente (38) herzustellenden Segmenten (20) entsprechen, sowie mit wenigstens einem dritten Hohlbereich (16), dem die erste Komponente (38) zuführbar ist und der mit den zweiten Hohlbereichen (14) derart in Verbindung steht, dass dem dritten Hohlbereich (16) zugeführtes Material ausschliesslich den zweiten Hohlbereichen (14) zugeführt wird;
- einer zweiten Form (40) mit einem vierten Hohlbereich (48), der zumindest im Bereich um die Segmente (20) grösser als der zweite Hohlbereich (14) ist;
- Mitteln zum Entfernen der ersten Form (10) zumindest teilweise derart, dass der dritte Hohlbereich (16) einschliesslich darin zurückgebliebenem, erstarrten Material (22) von den Segmenten (20) und den übrigen Bereichen (18) der Zahnbürste (50) entfernt wird.

16. Vorrichtung nach Anspruch 15, **gekennzeichnet durch** Mittel zum Einbringen der Segmente (20) und der übrigen Bereiche (18) der Zahnbürste (50) in die zweite Form (40).

17. Vorrichtung nach Anspruch 15 oder 16, **dadurch gekennzeichnet, dass** die zweiten Hohlbereiche (14) zur Herstellung von einer Mehrzahl voneinander getrennter Segmente (20) aus einer Mehrzahl von Unterbereichen bestehen, die ausschliesslich über den dritten Hohlbereich (16) miteinander in Verbindung stehen.

18. Vorrichtung nach Anspruch 17, **dadurch gekennzeichnet, dass** die erste Form (10) derart geformt ist, dass im Kopfbereich (52) eine Mehrzahl von Segmenten (20) ausgebildet werden, die vorzugsweise zur Halterung von Borstenbündeln (58) oder anderen Reinigungs- und/oder Massageelemente geeignet sind.

19. Vorrichtung nach Anspruch 18, **dadurch gekennzeichnet, dass** die zweite Form (40) derart an die erste Form (10) angepasst ausgeformt ist, dass Verbindungselemente (42) aus der zweiten Komponente (39) in Form einer Membran (43) ausgebildet werden, in welche die Segmente (20) wenigstens teilweise eingebettet sind und die mit den übrigen Bereichen (18) aus der ersten Komponente (38) vorzugsweise federnd verbunden ist.

20. Vorrichtung nach Anspruch 18 oder 19, **dadurch gekennzeichnet, dass** der zweite Hohlbereich (14) derart geformt ist, dass die Segmente (20) die Form von an zwei Seiten offenen Hülsen aufweisen, durch welche Borsten hindurchführbar sind, wobei die Öffnungsrichtungen vorzugsweise im wesentlichen senkrecht zur Fläche des Kopfbereichs orientiert sind.

21. Vorrichtung nach einem der Ansprüche 15 bis 20, **dadurch gekennzeichnet, dass** die erste Form (10) aus wenigstens drei Teilformen (30, 32, 34) besteht, wobei die ersten und die zweiten Hohlbereiche (12, 14) zwischen einer ersten und einer zweiten Teilform (30, 32) und der dritte Hohlbereich (16) zwischen der zweiten Teilform (32) und einer dritten Teilform (34) ausgebildet sind.

22. Vorrichtung nach Anspruch 21, **dadurch gekennzeichnet, dass** die zweite Form (40) aus wenigstens zwei Teilformen (30, 46) besteht, wobei eine der Teilformen (30, 46) die erste Teilform (30) ist.

23. Vorrichtung nach einem der Ansprüche 15 bis 22, **gekennzeichnet durch** eine Handhabungseinheit zum Verändern der Lage und/oder Orientierung der Segmente (20) relativ zueinander vor dem Anspritzen der zweiten Komponente (39).

24. Zahnbürste mit einem Körper, der wenigstens einen Griffbereich (56), einen Halsbereich (54) und einen Kopfbereich (52) umfasst, wobei der Körper zumindest teilweise aus wenigstens einer ersten und einer zweiten Komponente (38, 39) besteht, wobei die erste Komponente (38) im Kopfbereich eine Mehrzahl von Segmenten (20) aufweist, die von übrigen Bereichen (18) aus der ersten Komponente (38) getrennt und in die zweite Komponente (39) eingebettet sind, wobei im Kopfbereich (52) eine Membran (43) aus der zweiten Komponente (39) aufgespannt ist, in die die Segmente (20) eingebettet sind, die Segmente (20) die Form von einzelnen und/oder miteinander verbundenen Hülsen oder Bechern haben, welche zur Aufnahme von Borstenbündeln geeignet sind, und die Membran (43) elastisch und dünner als die Segmente (20) ist, **dadurch gekennzeichnet, dass** die Membran gewölbt ist und dass die erste Komponente (38) eine Hartkomponente und die zweite Komponente (39) eine Weichkomponente ist.

25. Zahnbürste nach Anspruch 24, **dadurch gekennzeichnet, dass** der Kopfbereich (52) einen umlaufenden oder teilweise offenen Rand (52a) aus der ersten Komponente (38) aufweist, in dem die Membran (43) aus der zweiten Komponente (39) aufgespannt ist.

26. Zahnbürste nach Anspruch 24, **dadurch gekennzeichnet, dass** der Kopfbereich (52) wenigstens zwei Verankerungsstellen aufweist, an denen die Membran befestigt ist.

27. Zahnbürste nach einem der Ansprüche 24 bis 26, **dadurch gekennzeichnet, dass** die Membran (43) unter Vorspannung derart mit dem Körper verbunden ist, dass sie die gewölbte Form hat.

28. Zahnbürste nach einem der Ansprüche 24 bis 27, **dadurch gekennzeichnet, dass** die Segmente (20) eine elliptisch, kreisförmig, nierenförmig und/oder achtförmig geformte Öffnung aufweisen.

29. Zahnbürste nach einem der Ansprüche 24 bis 28, **dadurch gekennzeichnet, dass** Reinigungs- und/oder Massageelemente aus der zweiten Komponente vorhanden sind, die vorzugsweise mit der Membran (43) verbunden und vorzugsweise in demselben Herstellungsschritt wie die Membran (43) hergestellt sind.

30. Zahnbürste nach einem der Ansprüche 24 bis 28, **dadurch gekennzeichnet, dass** die Segmente nur an ihrem oberen Rand (20a) in die Membran (43) eingebettet sind.

## Claims

1. A method for producing a toothbrush (50) with a body, which comprises at least a handle region (56), a neck region (54) and a head region (52), by the two-component or multi-component injection-molding process, the body consisting at least partially of at least a first and a second component (38, 39) and the first component (38) having at least one segment (20), which is separated from other regions (18) of the first component (38), with the following steps:
- providing a first mold (10), with first hollow regions (12), which correspond to the other regions (18) of the body to be produced from the first component (38) and to which the first component (38) can be supplied, with second hollow regions (14), which correspond to the at least one segment (20) to be produced from the first component (38) and which are completely seperated from the first hollow regions (12) and, if required, are kept at a distance from one another, and also with at least one third hollow region (16), to which the first component (38) can be supplied and which is in connection with the second hollow regions (14) in such a way that material supplied to the third hollow region (16) is exclusively supplied to the second hollow regions (14);
- providing a second mold (40), with fourth hollow regions (48), which are located at least in the region around the at least one segment (20);
- injection-molding the other regions (18) of the body by supplying the first component (38) to the first hollow regions (12);
- injection-molding the at least one segment (20) in the second hollow regions (14) by supplying the first component (38) to the third hollow region (16);
- removing the solidified material (22) remaining behind in the third hollow region (16);
- changing the mold;
- injection-molding connecting elements (42, 43) between the at least one segment (20) and/or the other regions (18) of the body by supplying the second component (39) to the second mold (40).

2. The method as claimed in claim 1, wherein the first component (38) is a hard component and the second component (39) is a hard or a soft component.

3. The method as claimed in claim 2, wherein the hard component consists of styrene-acrylonitrile (SAN), polyethylene terephthalate (PET), polyethylene (PE), polymethylmethacrylate (PMMA), acrylobutadiene styrene (ABS) or polypropylene (PP).

4. The method as claimed in claim 2 or 3, wherein the soft component consists of a rubber-elastic material, preferably a thermoplastic elastomer (TPE), for example polyurethane (PU).

5. The method as claimed in one of the preceding claims, wherein the spatial position of the segments (20) in relation to one another and/or in relation to the other regions (18) of the body is changed, in particular by translation and/or rotation, before the injection-molding of the second component (39).

6. The method as claimed in one of the preceding claims, wherein a plurality of segments (20) are provided in the head region (52), bristle clusters (58) being inserted into the first mold (10) before the injection-molding of the first component (38) and, during the production of the segments (20), being fixed by the latter by encapsulation or, during the injection-molding of the second component (39), being fixed by the latter in or on the segments (20) or, after the injection-molding of the first and the second components (38, 39), being fixed in the segments (20).

7. The method as claimed in one of the preceding claims, wherein the first mold (10) is formed by at least three part-molds (30, 32, 34), the first and second hollow regions (12, 14) being formed between a first and a second part-mold (30, 32) and the third hollow region (16) being formed between the second part-mold (32) and a third part-mold (34).

8. The method as claimed in claim 7, wherein the second and third part-molds (32, 34) are together moved away from the first part-mold (30) to remove the solidified material (22) remaining behind in the third hollow region (16).

9. The method as claimed in claim 7 or 8, wherein, to change the mold, the first part-mold (30) is joined together with a further part-mold (46), together with which it forms the second mold (40).

10. The method as claimed in one of claims 1 to 5, wherein a number of segments (20) that are separate from one another are produced, in that the first mold (10) has a number of second hollow regions (14) kept at a distance from one another.

11. The method as claimed in claim 10, wherein, before, after or during the injection-molding of the connecting elements (42, 43), bristles are attached to the at least one segment (20) and/or the other regions (18), preferably by conventional tufting, by the Anchor Free Tufting (AFT) method or by the In Mold Tufting (IMT) Method.

12. The method as claimed in claim 10 or 11, wherein the at least one segment (20), the other regions (18) and the connecting elements (42, 43) are shaped in such a way as to form a carrier element (68) for bristles and/or other cleaning elements, which is connected, in particular welded, to a separately produced body (50').

13. The method as claimed in claim 12, wherein the connecting elements (42) are formed as a membrane (43), in which the at least one segment (20) is embedded, and wherein the other regions (18) are formed at the periphery of the membrane (43), completely or partially enclosing the latter.

14. The method as claimed in claim 13, wherein the carrier element (68) is provided with bristles, preferably by the AFT method or by conventional tufting, and wherein the carrier element (68) provided with bristles is connected to the separately produced body (50'), in that at least the other regions (18) are at least partially connected, preferably welded, to the body (50').

15. A device for carrying out the method as claimed in one of the preceding claims, with
- a first mold (10), with first hollow regions (12), which correspond to the other regions (18) of the body to be produced from the first component (38) and to which the first component (38) can be supplied, with second hollow regions (14), which are kept at a distance from one another, completely separated form the first hollow regions (12) and correspond to the segments (20) to be produced from the first component (38), and also with at least one third hollow region (16), to which the first component (38) can be supplied and which is in connection with the second hollow regions (14) in such a way that material supplied to the third hollow region (16) is exclusively supplied to the second hollow regions (14);
- a second mold (40), with a fourth hollow region (48), which is larger than the second hollow region (14), at least in the region around the segments (20);
- means for removing the first mold (10) at least partially in such a way that the third hollow region (16), including solidified material (22) remaining behind in it, is removed from the segments (20) and the other regions (18) of the toothbrush (50).

16. The device as claimed in claim 15, having means for introducing the segments (20) and the other regions (18) of the toothbrush (50) into the second mold (40).

17. The device as claimed in claim 15 or 16, wherein the second hollow regions (14) for producing a plurality of segments (20) that are separate from one another comprise a plurality of subregions, which are in connection with one another exclusively via the third hollow region (16).

18. The device as claimed in claim 17, wherein the first mold (10) is shaped in such a way as to form in the head region (52) a plurality of segments (20) which are suitable preferably for securing bristle clusters (58) or other cleaning and/or massaging elements.

19. The device as claimed in claim 18, wherein the second mold (40) is shaped such that it is adapted to the first mold (20) in such a way that connecting elements (42) are formed from the second component (39) as a membrane (43), in which the segments (20) are at least partially embedded and which is connected, preferably resiliently, to the other regions (18) of the first component (38).

20. The device as claimed in claim 18 or 19, wherein the second hollow region (14) is shaped in such a way that the segments (20) have the form of sleeves that are open at two ends, through which bristles can be led, the opening directions preferably being oriented substantially perpendicularly in relation to the surface area of the head region.

21. The device as claimed in one of claims 15 to 20, wherein the first mold (10) comprises at least three part-molds (30, 32, 34), the first and second hollow regions (12, 14) being formed between a first and a second part-mold (30, 32) and the third hollow region (16) being formed between the second part-mold (32) and a third part-mold (34).

22. The device as claimed in claim 21, wherein the second mold (40) comprises at least two part-molds (30, 46), one of the part-molds (30, 46) being the first part-mold (30).

23. The device as claimed in one of claims 15 to 22, having a handling unit for changing the position and/or orientation of the segments (20) in relation to one another before the second component (39) is injected.

24. A toothbrush with a body, which comprises at least a handle region (56), a neck region (54) and a head region (52), the body consisting at least partially of at least a first and a second component (38, 39), the first component (38) having in the head region a plurality of segments (20), which are separate from the other regions (18) of the first component (38) and are embedded in the second component (39), in the head region (52), a membrane (43) of the second component (39), in which the segments (20) are embedded, is mounted, the segments (20) have the form of individual and/or interconnected sleeves or cups, which are suitable for receiving bristle clusters, and the membrane (43) is elastic and thinner than the segments (20), wherein the membrane (43) is arched and the first component (38) is a hard component and the second component (39) is a soft component.

25. The toothbrush as claimed in claim 24, wherein the head region (52) has an all-round or partially open periphery (52a) of the first component (38), in which the membrane (43) of the second component (39) is mounted.

26. The toothbrush as claimed in claim 24, wherein the head region (52) has at least two anchoring locations, at which the membrane is fastened.

27. The toothbrush as claimed in one of claims 24 to 26, wherein the membrane (43) is connected to the body under prestress in such a way that it has the arched shape.

28. The toothbrush as claimed in one of claims 24 to 27, wherein the segments (20) have an opening of an elliptical, circular or kidney shape and/or in the form of a figure of eight.

29. The toothbrush as claimed in one of claims 24 to 28, wherein there are cleaning and/or massaging elements of the second component, which are preferably connected to the membrane (43) and are preferably produced in the same production step as the membrane (43).

30. The toothbrush as claimed in one of claims 24 to 28, wherein the segments are embedded in the membrane (43) only at their upper periphery (20a).

## Revendications

1. Procédé de fabrication d'une brosse à dents (50) dotée d'un corps comprenant au moins une zone de manche (56), une zone de cou (54) et une zone de tête (52), selon le procédé de moulage par injection à deux composants ou plus, le corps se composant au moins en partie d'au moins un premier et un deuxième composant (38, 39) et le premier composant (38) comportant au moins un segment (20) séparé des zones restantes (18) composées du premier composant (38), avec les étapes suivantes :
- mise en place d'un premier moule (10) avec des premières zones creuses (12) correspondant aux zones restantes (18) du corps à fabriquer à partir du premier composant (38) et dans lesquelles le premier composant (38) peut être amené, avec des deuxièmes zones creuses (14) correspondant à l'au moins un segment (20) à fabriquer à partir du premier composant (38) et entièrement séparées des premières zones creuses (12) et le cas échéant espacées les unes par rapport aux autres, ainsi qu'avec au moins une troisième zone creuse (16) dans laquelle le premier composant (38) peut être amené et qui est reliée aux deuxièmes zones creuses (14) de telle sorte que la matière amenée à la troisième zone creuse (16) est amenée exclusivement aux deuxièmes zones creuses (14) ;
- mise en place d'un deuxième moule (40) avec des quatrièmes zones creuses (48) se trouvant au moins dans la zone entourant l'au moins un segment (20) ;
- moulage par injection des zones restantes (18) du corps par amenée du premier composant (38) aux premières zones creuses (12) ;
- moulage par injection de l'au moins un segment (20) prévu dans les deuxièmes zones creuses (14) par amenée du premier composant (38) dans la troisième zone creuse (16) ;
- retrait de la matière (22) rigidifiée restant à l'arrière dans la troisième zone creuse (16) ;
- changement de moule ;
- moulage par injection des éléments de jonction (42, 43) prévus entre l'au moins un segment (20) et/ou les zones restantes (18) du corps par amenée du deuxième composant (39) au deuxième moule (40).

2. Procédé selon la revendication 1, **caractérisé en ce que** le premier composant (38) est un composant dur et que le deuxième composant (39) est un composant dur ou un composant mou.

3. Procédé selon la revendication 2, **caractérisé en ce que** le composant dur appartient au groupe composé par le styrène-acronitrile (SAN), le polyéthylène téréphtalate (PET), le polyéthylène (PE), le polyméthacrylate de méthyle (PMMA), l'acrylonitrile-butadiène-styrène (ABS), le polypropylène (PP).

4. Procédé selon la revendication 2 ou 3, **caractérisé en ce que** le composant mou est fabriqué en matière élastique caoutchouteuse, de préférence un élastomère thermoplastique (TPE), par exemple du polyuréthane (PUR).

5. Procédé selon l'une quelconque des revendications précédentes, **caractérisé en ce que** la position dans l'espace des segments (20) les uns par rapport aux autres et/ou par rapport aux zones restantes (18) du corps est modifiée avant le moulage par injection du deuxième composant (39), notamment par translation et/ou rotation.

6. Procédé selon l'une quelconque des revendications précédentes, **caractérisé en ce qu'**une pluralité de segments (20) est prévue dans la zone de tête (52), des paquets de soies (58) étant introduits dans le premier moule (10) avant le moulage par injection du premier composant (38) et étant fixés par lui par injection alentour lors de la fabrication des segments (20) ou étant fixés par lui dans ou contre les segments (20) lors du moulage par injection du deuxième composant (39) ou étant fixés dans les segments (20) après le moulage par injection du premier et du deuxième composant (38, 39).

7. Procédé selon l'une quelconque des revendications précédentes, **caractérisé en ce que** le premier moule (10) est formé par au moins trois parties de moule (30, 32, 34), la première et la deuxième zone creuse (12, 14) étant formées entre une première et une deuxième partie de moule (30, 32) et la troisième zone creuse (16) étant formée entre la deuxième partie de moule (32) et une troisième partie de moule (34).

8. Procédé selon la revendication 7, **caractérisé en ce que** la deuxième et la troisième partie de moule (32, 34) sont retirées pour enlever conjointement de la première partie de moule (30) la matière (22) rigidifiée restant dans la troisième zone creuse (16).

9. Procédé selon la revendication 7 ou 8, **caractérisé en ce que** la première partie de moule (30) est assemblée à une autre partie de moule (46) avec laquelle elle forme le deuxième moule (40) pour changer de moule.

10. Procédé selon l'une quelconque des revendications 1 à 5, **caractérisé en ce que** plusieurs segments (20) séparés sont fabriqués **en ce que** le premier moule (10) comporte plusieurs deuxièmes zones creuses (14) espacées les unes par rapport aux autres.

11. Procédé selon la revendication 10, **caractérisé en ce qu'**avant, après ou pendant le moulage par injection des éléments de jonction (42, 43), des soies sont amenées au niveau de l'au moins un segment (20) et/ou des zones restantes (18), de préférence par empoilage conventionnel, selon le procédé d'empoilage sans ancrage (Anchor Free Tufting, AFT) ou d'empoilage dans le moule (In Mould Tufting, IMT).

12. Procédé selon la revendication 10 ou 11, **caractérisé en ce que** l'au moins un segment (20), les zones restantes (18) ainsi que les éléments de jonction (42, 43) sont formés de telle sorte qu'un élément de support (68) est réalisé pour les soies et/ou les autres éléments de nettoyage, ledit élément de support étant relié au corps (50') séparé, notamment soudé.

13. Procédé selon la revendication 12, **caractérisé en ce que** les éléments de jonction (42) prennent la forme d'une membrane (43) dans laquelle l'au moins un segment (20) est encastré et que les zones restantes (18) sont réalisées au bord de la membrane (43) l'entourant pour tout ou partie.

14. Procédé selon la revendication 13, **caractérisé en ce que** l'élément de support (68) est empoilé, de préférence selon le procédé AFT ou par empoilage conventionnel et que l'élément de support (68) empoilé est relié au corps (50') fabriqué de façon séparée **en ce qu'**au moins les zones restantes (18) sont reliées au moins en partie au corps (50'), de préférence soudées.

15. Dispositif de mise en oeuvre du procédé selon l'une quelconque des revendications précédentes avec :
- un premier moule (10) doté de premières zones creuses (12) correspondant aux zones restantes (18) du corps à fabriquer à partir du premier composant (38) et dans lesquelles le premier composant (38) peut être amené, avec des deuxièmes zones creuses (14) espacées les unes par rapport aux autres et entièrement séparées des premières zones creuses (12) correspondant aux segments (20) à fabriquer à partir du premier composant (38), ainsi qu'avec au moins une troisième zone creuse (16) dans laquelle le premier composant (38) peut être amené et reliée aux deuxièmes zones creuses (14) de telle sorte que la matière amenée dans la troisième zone creuse (16) est exclusivement amenée aux deuxièmes zones creuses (14) ;
- un deuxième moule (40) doté d'une quatrième zone creuse (48) de plus grande taille, au moins dans la zone entourant les segments (20), que la deuxième zone creuse (14) ;
- des moyens de retrait du premier moule (10) au moins en partie de telle sorte que la troisième zone creuse (16) soit séparée, y compris la matière (22) rigidifiée restée à l'arrière, des segments (20) et des zones restantes (18) de la brosse à dents (50).

16. Dispositif selon la revendication 15, **caractérisé par** des moyens d'amenée des segments (20) et des zones restantes (18) de la brosse à dents (50) dans le deuxième moule (40).

17. Dispositif selon la revendication 15 ou 16, **caractérisé en ce que** les deuxièmes zones creuses (14) se composent, pour la fabrication d'une pluralité de segments (20) séparés les uns des autres, d'une pluralité de sous-zones reliées entre elles exclusivement via la troisième zone creuse (16).

18. Dispositif selon la revendication 17, **caractérisé en ce que** le premier moule (10) est formé de telle sorte qu'une pluralité de segments (20) sont réalisés dans la zone de tête (52), de préférence adaptés au maintien de paquets de soies (58) ou d'autres moyens de nettoyage et/ou de massage.

19. Dispositif selon la revendication 18, **caractérisé en ce que** le deuxième moule (40) est réalisé de façon à être adapté au premier moule (10) de telle sorte que les éléments de jonction (42) sont réalisés à partir du deuxième composant (39) sous la forme d'une membrane (43) dans laquelle les segments (20) sont encastrés au moins en partie et reliés, de préférence de façon élastique à la façon d'un ressort, aux zones restantes (18) fabriquées à partir du premier composant (38).

20. Dispositif selon la revendication 18 ou 19, **caractérisé en ce que** la deuxième zone creuse (14) est formée de telle sorte que les segments (20) prennent la forme d'enveloppes ouvertes des deux côtés à travers lesquelles les soies peuvent être introduites, les directions d'ouverture étant de préférence orientées pour l'essentiel perpendiculairement à la surface de la zone de tête.

21. Dispositif selon l'une quelconque des revendications 15 à 20, **caractérisé en ce que** le premier moule (10) se compose d'au moins trois parties de moule (30, 32, 34), les première et deuxième zones creuses (12, 14) étant réalisées entre une première et une deuxième partie de moule (30, 32) et la troisième zone creuse (16) étant réalisée entre la deuxième partie de moule (32) et une troisième partie de moule (34).

22. Dispositif selon la revendication 21, **caractérisé en ce que** le deuxième moule (40) se compose d'au moins deux parties de moule (30, 46), une des parties de moule (30, 46) étant la première partie de moule (30).

23. Dispositif selon l'une quelconque des revendications 15 à 22, **caractérisé par** une unité de manipulation permettant de modifier la position et/ou l'orientation des segments (20) de façon relative les uns par rapport aux autres avant l'injection du deuxième composant (39).

24. Brosse à dents équipée d'un corps comprenant au moins une zone de manche (56), une zone de cou (54) et une zone de tête (52), le corps se composant au moins en partie d'au moins un premier et un deuxième composant (38, 39), le premier composant (38) comportant dans la zone de tête une pluralité de segments (20) séparés des zones restantes (18) fabriquées à partir du premier composant (38) et encastrés dans le deuxième composant (39), une membrane (43) fabriquée à partir du deuxième composant (39) et dans laquelle les segments (20) sont encastrés étant tendue dans la zone de tête (52), les segments (20) prenant la forme d'enveloppes ou de béchers individuels ou reliés entre eux adaptés pour accueillir des paquets de soies et la membrane (43) étant élastique et plus fine que les segments (20), **caractérisée en ce que** la membrane est bombée et que le premier composant (38) est un composant dur et que le deuxième composant (39) est un composant mou.

25. Brosse à dents selon la revendication 24, **caractérisée en ce que** la zone de tête (52) présente un bord (52a) faisant tout le tour de la périphérie ou étant en partie ouvert, fabriqué à partir du premier composant (38) dans lequel la membrane (43) fabriquée à partir du deuxième composant (39) est tendue.

26. Brosse à dents selon la revendication 24, **caractérisée en ce que** la zone de tête (52) présente au moins deux points d'ancrage au niveau desquels la membrane est fixée.

27. Brosse à dents selon l'une quelconque des revendications 24 à 26, **caractérisée en ce que** la membrane (43) est reliée en précontrainte au corps de telle sorte qu'elle prend la forme bombée.

28. Brosse à dents selon l'une quelconque des revendications 24 à 27, **caractérisée en ce que** les segments (20) comportent une ouverture en forme d'ellipse, de cercle, de haricot ou de huit.

29. Brosse à dents selon l'une quelconque des revendications 24 à 28, **caractérisée par** la présence d'éléments de nettoyage et/ou de massage fabriqués à partir du deuxième composant, lesdits éléments étant de préférence reliés à la membrane (43) et fabriqués à la même étape de fabrication que la membrane (43).

30. Brosse à dents selon l'une quelconque des revendications 24 à 28, **caractérisée en ce que** les segments ne sont encastrés dans la membrane (43) qu'au niveau de leur bord supérieur (20a).
